# EUROPÄISCHE PATENTSCHRIFT

(11) **EP 3 489 416 B1**
(45) Veröffentlichungstag und Bekanntmachung des Hinweises auf die Patenterteilung: **10.06.2020**
(21) Anmeldenummer: 18206168.9
(22) Anmeldetag: 14.11.2018
(51) Int. Cl.: E01C 23/088, B62D 33/06, B62D 33/063, B60J 7/16, B60J 7/20

(54) **BODENBEARBEITUNGSMASCHINE MIT GEMEINSAM MIT EINEM SCHUTZDACH ANHEB- UND ABSENKBARER SCHEIBENANORDNUNG UND VERFAHREN ZUR VERÄNDERUNG DER HÖHENABMESSUNG DIESER BODENBEARBEITUNGSMASCHINE**
SOIL WORKING MACHINE WITH AN EXTENDABLE AND RETRACTABLE ARRANGEMENT COMBINING FRONT WINDOW AND PROTECTIVE ROOF AND METHOD OF CHANGING THE HEIGHT OF THIS SOIL WORKING MACHINE
MACHINE DE TRAITEMENT DU SOL AVEC UN DISPOSITIF DEPLOYABLE ET RETRACTABLE ASSOCIANT PARE-BRISE ET TOIT PROTECTEUR ET PROCÉDÉ POUR MODIFIER LA HAUTEUR DE CETTE MACHINE DE TRAITEMENT DU SOL

(30) Priorität: 24.11.2017 DE 102017221053
(43) Veröffentlichungstag der Anmeldung: 29.05.2019
(73) Patentinhaber: Wirtgen GmbH, 53578 Windhagen (DE)
(72) Erfinder: Barimani, Cyrus, 53639 Königswinter (DE); Drumm, Stephan, 53560 Vettelschoß (DE); Körtgen, Alexander, 53117 Bonn (DE)
(74) Vertreter: Ruttensperger Lachnit Trossin Gomoll

(56) Entgegenhaltungen:
- EP-A1- 0 810 324
- EP-A1- 2 723 629
- WO-A1-96/24725
- DE-A1-102016 010 660
- DE-U1-202013 006 878
- JP-U- S5 431 607

## Beschreibung

Die vorliegende Erfindung betrifft eine Bodenbearbeitungsmaschine, wie etwa Straßenfräse, Recycler, Stabilisierer oder Surface-Miner, mit dem Merkmalen des Oberbegriffs des Anspruchs 1.

Eine solche Bodenbearbeitungsmaschine in Gestalt eines Stabilisierers ist aus der WO 96/24725 A1 bekannt. Das Schutzdach dieser Bodenbearbeitungsmaschine ist mit den starr mit dem Schutzdach verbundenen transparenten Scheiben um eine in Maschinenquerrichtung verlaufende Schwenkachse schwenkbar. Dabei ist der untere Rand der Windschutzscheibe über ein Schwenkgelenk mit dem Maschinenrahmen verbunden. Beim Umklappen des Schutzdaches wird ein im betriebsbereiten Zustand unterer Bereich der Scheiben des Schutzdaches, welcher eine Kreisbahn um die Schwenkachse beschreibt, zunächst vom Fahrstandboden entfernt und dann wieder angenähert.

Eine weitere Bodenbearbeitungsmaschine, in Gestalt einer Straßen-Großfräse der Anmelderin, ist mit der Bezeichnung "W 200" bekannt. Bei dieser Bodenbearbeitungsmaschine ist das Schutzdach über einen vorderen und einen hinteren Verbindungsrahmen derart mit dem Maschinenrahmen verbunden, dass das Schutzdach mit den Verbindungsrahmen ein Parallelogramm-Viergelenkgetriebe bildet. Sowohl der vordere als auch der hintere Verbindungsrahmen sind jeweils um eine in Maschinenquerrichtung (parallel zur Nickachse) verlaufende Maschinenrahmen-Schwenkachse gelenkig mit dem Maschinenrahmen verbunden als auch um eine hierzu parallele Schutzdach-Schwenkachse gelenkig mit dem Schutzdach verbunden. Damit sowohl die Verbindungsrahmen wie auch das Schutzdach in der Transportstellung möglichst flach auf dem Maschinenrahmen aufliegen bzw. an diesem anliegen, weisen die Maschinenrahmen-Schwenkachse und Schutzdach-Schwenkachse für jeden der im Wesentlichen ebenen Verbindungsrahmen einen gleichen Abstand voneinander auf. Die Höhenerstreckung (parallel zur Gierachse) der Bearbeitungsmaschine kann so stark verringert werden, was für eine Einhaltung von maximalen Transport-Außenmaßen beim Transport der Maschine vorteilhaft ist.

Das Schutzdach der W 200 führt während einer Verstellung zwischen Transportstellung und Betriebsstellung eine durch die beiden Verbindungsrahmen geführte translatorische Bewegung aus, die längs etwa einer Viertelkreis-Bewegungsbahn verläuft. Das Schutzdach wird daher im Stand der Technik nicht nur zum Fahrstandboden hin abgesenkt oder von diesem angehoben, sondern wird gleichzeitig mit der Annäherung an den oder mit dem Anheben von dem Fahrstandboden längs der Maschinenlängsrichtung (parallel zur Rollachse) bewegt.

Da die Verbindungsrahmen der W 200 jeweils eine Scheibenanordnung tragen, geht mit der Änderung des Abstands des Schutzdaches vom Fahrstandboden eine Änderung des Abstands der Scheibenanordnung vom Fahrstandboden einher. Da die Scheibenanordnung der bekannten W 200 gemeinsam mit dem sie tragenden Verbindungsrahmen um die oben genannte, zur Nickachse parallele Maschinenrahmen-Schwenkachse verschwenkt wird, ändert sich mit dem Abstand des Schutzdaches vom Fahrstandboden im Wesentlichen nur der Abstand jenes Bereichs der Scheibenanordnung vom Fahrstandboden, welcher zwischen der Maschinenrahmen-Schwenkachse und dem Schutzdach gelegen ist. Der unmittelbar an der Maschinenrahmen-Schwenkachse gelegene Bereich der Scheibenanordnung ändert seinen Abstand relativ zum Fahrstandboden nicht bzw. nur in vernachlässigbarer Größe oder ändert ihn sogar in einem jenem des Schutzdachs entgegengesetzten Änderungssinn. Dies ändert jedoch nichts daran, dass sich der Schwerpunkt einer von einem Verbindungsrahmen getragenen Scheibenanordnung während der Verstellung des Schutzdaches der bekannten W 200 zwischen Betriebsstellung und Transportstellung vom Fahrstandboden entfernt bzw. an diesem annähert.

Dann, wenn sich das Schutzdach in der Transportstellung befindet, ist die Höhenabmessung der Bodenbearbeitungsmaschine derart verringert, bzw. kann über ein Absenken des Maschinenrahmens durch das Fahrwerk zum Aufstandsuntergrund hin derart verringert werden, dass für einen Transport einzuhaltende maximale Transport-Außenmaße auch tatsächlich eingehalten werden können. Beispielsweise darf in Deutschland ein beladener Transport-Sattelauflieger ohne Sondergenehmigung eine Gesamthöhe von 4,00 m nicht überschreiten.

Immer häufiger treten bei Bodenbearbeitungsmaschinen in Phasen eines unbeobachteten Nichtgebrauchs Probleme mit Vandalismus auf. Unbefugte betreten dabei Baustellengelände und machen sich an den dort abgestellten Maschinen zu schaffen. Dabei versuchen manche auch, in den Fahrstand einer Bodenbearbeitungsmaschine zu gelangen. Diese Personen sind in der Regel nicht von technischer Neugier, sondern von Zerstörungswut getrieben, sodass großes Interesse besteht, den Zugang zum Fahrerstand für Unbefugte zu erschweren und auch leicht zerstörbare Baugruppen, wie etwa transparente Scheiben, möglichst vor einem Angriff durch Vandalen zu schützen.

Grundsätzlich kann mit einem Absenken des Schutzdaches von der Betriebsstellung in die Transportstellung ein Zugang in den Fahrstand erschwert werden. Wegen der geschilderten Kinematik des Schutzdaches liegt bei der bekannten W 200 in der Transportstellung des Schutzdaches eine Scheibenanordnung des Fahrstands offen da und ist somit einer Vandalismusgefahr ausgesetzt.

Das Schutzdach mit davon abstehenden Scheiben der aus der WO 96/24725 A1 bekannten Bodenbearbeitungsmaschine liegt auch im umgeklappten Zustand von außen zugänglich vor. Außerdem kann sich im umgeklappten Schutzdach ohne weitere Abdeckmaßnahmen Schmutz sammeln, denn das umgeklappte Schutzdach liegt schalenartig frei.

Es ist Aufgabe der vorliegenden Erfindung, die eingangs genannte Bodenbearbeitungsmaschine derart weiterzubilden, dass wesentliche Teile ihres Fahrstands, wie beispielsweise die oben genannte Scheibenanordnung, besser gegen einen Vandalismusangriff geschützt werden können als dies bei den Maschinen des Standes der Technik der Fall ist.

Erfindungsgemäß wird diese Aufgabe gelöst durch eine Bodenbearbeitungsmaschine mit allen Merkmalen des Anspruchs 1. Auch bei dieser Bodenbearbeitungsmaschine ist die Scheibenanordnung gemeinsam mit dem Schutzdach heb- und senkbar ist, wobei die Scheibenanordnung mit ihrem unteren Rand an den Fahrstandboden annäherbar und von diesem entfernbar an der Bodenbearbeitungsmaschine aufgenommen ist.

Anders als die oben geschilderte Scheibenanordnung der bekannten W 200 und der aus der WO 96/24725 A1 bekannten Bodenbearbeitungsmaschine wird die Scheibenanordnung der erfindungsgemäßen Bodenbearbeitungsmaschine während einer Verstellung des Schutzdaches zwischen der Betriebsstellung und der Transportstellung nicht ausschließlich rotatorisch bewegt, nämlich um die oben beschriebene Schwenkachse verschwenkt. Die Scheibenanordnung wird wenigstens auch translatorisch bewegt. Jeder Punkt der Scheibenanordnung befindet sich daher dann, wenn sich das Schutzdach in der Transportstellung befindet, näher am Fahrstandboden als dann, wenn sich das Schutzdach in der Betriebsstellung befindet. Die Scheibenanordnung kann bei der Verstellung des Schutzdaches zwischen der Betriebs- und der Transportstellung auch rein translatorisch bewegt werden.

Dabei soll nicht ausgeschlossen sein, dass der translatorischen Bewegung der Scheibenanordnung eine rotatorische Bewegung überlagert ist, etwa zur Vermeidung von mechanischen Biege- oder Torsionsspannungen in der Scheibenanordnung. Durch die translatorische Bewegung der Scheibenanordnung zum Fahrstandboden hin kann die Scheibenanordnung jedoch teilweise oder sogar vollständig verborgen sein, wenn sich das Schutzdach in der Transportstellung befindet. Somit kann die Scheibenanordnung dann, wenn sich das Schutzdach in der Transportstellung befindet, von außen unzugänglich und somit nicht oder nur mit erheblich vergrößertem Aufwand angegriffen werden.

Die Scheibenanordnung kann dabei eine transparente Scheibe umfassen oder sein, etwa aus Glas oder aus einem transparenten Kunststoff, wie etwa Polymethylmethacrylat (PMMA). Transparenter Kunststoff weist dabei in der Regel eine geringere Dichte als Glas auf und ist weniger bruchempfindlich, dafür ist Glas in der Regel kratzfester. Die Scheibenanordnung kann jedoch auch blickdicht als scheibenförmige Wand ausgebildet sein, etwa, wenn sie in einem Bereich außerhalb eines Arbeitssichtfelds des Maschinenführers angeordnet ist.

Die Scheibenanordnung kann einen die Scheibe einfassenden Rahmen aufweisen, was im Betrieb auf die transparente Scheibe etwaig einwirkende Biege- oder und Verwindungsbelastungen mindern kann, da zwischen dem Schutzdach und dem Maschinenrahmen auftretende Kräfte oder zu Kräften führende Verformungen vom Scheibenrahmen aufgenommen werden können und nicht oder wenigstens nicht vollständig von der Scheibe aufgenommen werden müssen. Der Begriff "Scheibe" ist dabei als Gestaltangabe zu verstehen und bezeichnet ein flächiges Bauteil, dass sich im Wesentlichen in einer Scheibenfläche, bevorzugt Scheibenebene, erstreckt und dessen Dickenrichtung orthogonal zur Scheibenfläche verläuft. Die Abmessungen der Scheibe längs der Scheibenfläche sind dabei um ein Vielfaches größer als ihre Dickenabmessung.

Insbesondere die oben genannten Seitenränder der Scheibenanordnung können durch die Scheibe selbst gebildet sein, was vorteilhaft das Sichtfeld durch die Scheibe vergrößert. Zur Verbindung der Scheibenanordnung mit dem Schutzdach im oberen Verbindungsbereich einerseits und mit der Verbindungsbasis im unteren Verbindungsbereich andererseits wird dagegen in der Regel eine Verbindungsvorrichtung erforderlich sein. Eine solche Verbindungsvorrichtung kann an einem Scheibenrahmen ausgebildet oder mit diesem verbunden sein.

Der untere Verbindungsbereich der Scheibenanordnung kann mit einem maschinenrahmenfesten, also im Wesentlichen zur gemeinsamen Bewegung mit dem Maschinenrahmen verbundenen Lagerbauteil verbunden sein oder kann mit einem fahrstandbodenfesten, also zur gemeinsamen Bewegung mit dem Fahrstandboden verbundenen Lagerbauteil verbunden sein. Dann, wenn der Fahrstandboden selbst maschinenrahmenfest ist, ist diese Unterscheidung unnötig, da dann jedes zur gemeinsamen Bewegung mit dem Fahrstandboden verbundene Bauteil auch zur gemeinsamen Bewegung mit dem Maschinenrahmen verbunden ist. Dann jedoch, wenn der Fahrstand insgesamt und mit ihm der Fahrstandboden relativ zum Maschinenrahmen verlagerbar angeordnet ist, wird die Scheibenanordnung in ihrem unteren Verbindungsbereich bevorzugt mit einem zur gemeinsamen Bewegung mit dem Fahrstandboden verbundenen Lagerbauteil verbunden sein, sodass Scheibenanordnung, Schutzdach und Fahrstandboden gemeinsam Teil des Fahrstands sein können und gemeinsam mit dem Fahrstand relativ zum Maschinenrahmen verlagert werden können. Um beide Fälle in der vorliegenden Anmeldung erfassen zu können, ist von der Verbindungsbasis die Rede, die je nach Ausgestaltung der Bodenbearbeitungsmaschine der maschinenrahmenfest oder/und der fahrstandbodenfest sein kann. Da relativ zum Maschinenrahmen verlagerbar angeordnete Fahrstandböden jedoch die Ausnahme bilden, ist der Maschinenrahmen bevorzugt die Verbindungsbasis. Fahrstandböden, die unter Zwischenanordnung einer Vibrationsdämpfung lediglich passiv-mikrobeweglich mit dem Maschinenrahmen verbunden sind, sind maschinenrahmenfeste Fahrstandböden im Sinne der vorliegenden Anmeldung.

Die Scheibenanordnung ist sowohl in der Betriebsstellung des Schutzdaches als auch Transportstellung als auch in wenigstens einer Zwischenposition während einer Verstellung des Schutzdaches zwischen Betriebs- und Transportstellung sowohl mit dem Schutzdach als auch mit der Verbindungsbasis verbunden. Bevorzugt ist die Scheibenanordnung dauerhaft, also unabhängig von der vom Schutzdach relativ zum Fahrstandboden eingenommenen Höhenposition mit dem Schutzdach und der Verbindungsbasis verbunden.

Während einer Verstellung des Schutzdaches zwischen der Betriebsstellung und der Transportstellung soll eine möglichst definierte Bewegung der Scheibenanordnung gewährleisten werden können. Dies gilt insbesondere für die Bewegung des unteren Verbindungsbereichs. Gemäß der vorliegenden Erfindung ist daher die Scheibenanordnung in ihrem unteren Verbindungsbereich mit der Verbindungsbasis über eine die Entfernungs- und die Annäherungsbewegung des unteren Verbindungsbereichs relativ zur Verbindungsbasis beim Heben bzw. Senken des Schutzdaches führende Linearführung verbunden.

Dabei ist ein Führungsteil der Linearführung, vorzugsweise eine Führungsschiene, fest mit der Verbindungsbasis verbunden. Dieses Führungsteil bildet das oben genannte maschinenrahmen- oder fahrstandbodenfeste Lagerbauteil. Ein weiteres Führungsteil der Linearführung, vorzugsweise ein am ersten Führungsteil beweglich geführter Führungswagen oder Führungsschlitten oder Gleitstein oder dergleichen, ist mit dem unteren Verbindungsbereich der Scheibenanordnung verbunden. Dabei sind die beiden Führungsteile längs einer von der Linearführung vorgegebenen Führungsbahn relativ zueinander beweglich gekoppelt. Lediglich der Vollständigkeit halber sei darauf hingewiesen, dass in kinematischer Umkehr der oben beschriebenen bevorzugten Ausführungsform auch die Scheibenanordnung fest mit einer Führungsschiene verbunden sein kann. Folglich ist dann der Führungswagen oder Führungsschlitten oder Gleitstein oder dergleichen - je nach Ausgestaltung der Maschine - maschinenrahmenfest oder/und fahrstandbodenfest.

Die Linearführung muss dabei den unteren Verbindungsbereich der Scheibenanordnung nicht notwendigerweise längs einer geradlinigen Führungsbahn führen. Die Führungsbahn kann auch eine oder mehrere gekrümmte Bahnbereiche aufweisen. Allerdings wird die Krümmung der Führungsbahn, wenn sie denn überhaupt vorliegt, vorzugsweise deutlich geringer ausfallen als bei der aus dem Stand der Technik bekannten Viertelkreis-Führungsbahn. Gemäß einer bevorzugten Ausführungsform ist die Führungsbahn jedoch geradlinig, um möglichst einfache Bewegungsverhältnisse am Schutzdach und an der Scheibenanordnung erzielen zu können.

Bevorzugt ist die vom Schutzdach überdeckbare Fläche des Fahrstandbodens - anders als bei der bekannten W 200 - in der Transportstellung nicht kleiner als in der Betriebsstellung. Die Überdeckung ist dabei im Zweifel zu ermitteln durch Projektion des Schutzdachs und des Fahrstandbodens längs der Gierachse der Maschine auf eine zur Gierachse orthogonale Projektionsebene.

Zur Vereinfachung der Hub- und Senkbewegung des Schutzdachs erfolgt diese bevorzugt längs einer geradlinigen Bewegungsbahn. Diese ist zur Gewährleistung ausreichender Überdeckung des Fahrstandbodens bevorzugt parallel zur Gierachse oder gegenüber derselben um nicht mehr als 10°, vorzugsweise um nicht mehr als 7,5° geneigt. Dann, wenn die Bewegungsbahn relativ zur Gierachse geneigt ist, ist diese bevorzugt um eine zur Nickachse parallele Neigeachse geneigt, besonders bevorzugt in Vorwärtsfahrtrichtung, so dass das Schutzdach in der Betriebsstellung dem vorderen Ende der Bodenbearbeitungsmaschine näher gelegen ist als in der Transportstellung. Zur möglichst einfachen und unbelasteten Bewegung des Schutzdaches gemeinsam mit der Scheibenanordnung zwischen der Betriebsstellung und der Transportstellung sind die Bewegungsbahnen des unteren Verbindungsbereichs der Scheibenanordnung einerseits und des Schutzdaches andererseits bevorzugt parallel oder wenigstens um nicht mehr als 5° relativ zueinander um eine zur Nickachse parallele Inklinationsachse geneigt.

Alternativ kann die Bahn des Schutzdaches bei seiner Verstellung wenigstens abschnittsweise geringfügig gekrümmt sein. Unabhängig davon, ob die Bewegungsbahn des Schutzdaches gekrümmt oder geneigt ist, ist es bevorzugt, dass die längs der Rollachse verlaufende Komponente der Bewegungsbahn nicht mehr als 25 %, vorzugsweise nicht mehr als 20 %, besonders bevorzugt nicht mehr als 12 %, der längs der Gierachse verlaufenden Komponente beträgt. Dadurch kann sichergestellt werden, dass das Schutzdach sowohl in der Transportstellung als auch in der Betriebsstellung einen Großteil, also mehr als die Hälfte, des Fahrstandbodens überdeckt.

Grundsätzlich kann daran gedacht sein, den oberen Verbindungsbereich der Scheibenanordnung starr mit dem Schutzdach oder/und den unteren Verbindungsbereich der Scheibenanordnung starr mit dem ihr zugeordneten Teil der Linearführung zu verbinden. Im Fahr- oder/und Bodenbearbeitungsbetrieb wirken auf den Maschinenrahmen Kräfte ein, die den Maschinenkörper elastisch verformen können, was wiederum belastend auf die Scheibenanordnung wirken kann. Eine solche unerwünschte Belastung kann gemäß einer Weiterbildung der Erfindung dadurch gemindert werden, dass der obere Verbindungsbereich der Scheibenanordnung mit dem Schutzdach um eine zur Bewegungsbahn der Hub- und Senkbewegung des Schutzdaches orthogonale, vorzugsweise zur Nickachse parallele Seiten-Bewegungsachse relativ zum Schutzdach drehbar verbunden ist. Somit können zwischen dem Schutzdach und der Scheibenanordnung keine Biegemomente um die Seiten-Bewegungsachse übertragen werden.

Zusätzlich oder alternativ kann der untere Verbindungsbereich der Scheibenanordnung mit der Verbindungsbasis um eine zur Seiten-Bewegungsachse parallele Lateral-Bewegungsachse relativ zur Verbindungsbasis drehbar verbunden sein. Dies führt dazu, dass zwischen der Verbindungsbasis und der Scheibenanordnung keine um die Lateral-Bewegungsachse wirkenden Biegemomente übertragbar sind. Zur Klarstellung sei angemerkt, dass dann, wenn der untere Verbindungsbereich um die Lateral-Bewegungsachse relativ zur Verbindungsbasis drehbar mit dieser verbunden ist, die Trajektorie der Lateral-Bewegungsachse die Bewegungsbahn des unteren Verbindungsbereichs anzeigt.

Weiter kann zusätzlich oder alternativ zu der um die Seiten- oder/und um die Lateral-Bewegungsachse drehbaren Verbindung der Scheibenanordnung mit dem Schutzdach bzw. mit der Verbindungsbasis vorgesehen sein, dass der obere Verbindungsbereich mit dem Schutzdach längs der Seiten-Bewegungsachse relativ zum Schutzdach translatorisch verschiebbar verbunden ist oder/und dass der untere Verbindungsbereich mit der Verbindungsbasis längs der Lateral-Bewegungsachse relativ zur Verbindungsbasis translatorisch verschiebbar verbunden ist. Dadurch kann nicht nur eine Kraftübertragung zwischen Schutzdach und Scheibenanordnung oder/und zwischen Verbindungsbasis und Scheibenanordnung parallel zur Seiten- bzw. Lateral-Bewegungsachse unterbunden werden. Eine Verbindung des oberen Verbindungsbereichs der Scheibenanordnung mit Schutzdach mit translatorischem Bewegungsfreiheitsgrad gestattet dem Maschinenführer, das Schutzdach relativ zur Scheibenanordnung längs der Seiten-Bewegungsachse zu verlagern. Eine Verbindung auch des unteren Verbindungsbereichs mit der Verbindungsbasis mit translatorischem Bewegungsfreiheitsgrad gestattet dem Maschinenführer, die Scheibenanordnung relativ zur Verbindungsbasis sowie relativ zum Schutzdach zu verlagern.

Bevorzugt sind der obere und der untere Verbindungsbereich sowohl translatorisch längs der als auch rotatorisch um die Seiten-Bewegungsachse und die Lateral-Bewegungsachse bewegbar mit dem Schutzdach bzw. der Verbindungsbasis verbunden. Dies kann konstruktiv in einfacher Weise durch Verwendung einer Paarung aus Wälzkörperbuchse, insbesondere Kugelbuchse, und Führungsstange zur Verbindung der Scheibenanordnung mit dem Schutzdach und mit der Verbindungsbasis realisiert sein. Die Wälzkörperbuchse ist nicht nur längs der Führungsstange translatorisch verlagerbar, sondern auch um die Führungsstange drehbar. Die Kombination aus Führungsstange und Wälzkörperbuchse kann Teil der oben genannten Verbindungsvorrichtung sein, welche die Scheibenanordnung mit dem Schutzdach bzw. der Verbindungsbasis verbindet. Dabei ist die eine Komponente aus Führungsstange und Wälzkörperbuchse mit der Scheibenanordnung und die jeweils andere Komponente mit dem Schutzdach bzw. mit der Verbindungsbasis verbunden.

Die Scheibenanordnung kann längs des durch die Führungsstange definierten Verfahrwegs in ihrer Relativposition zur Verbindungsbasis oder/und zum Schutzdach festlegbar sein. Hierzu können aktiv betätigbare Festlegemittel, wie etwa wenigstens eine reibschlüssige Klemme oder wenigstens ein formschlüssiges Rastmittel, vorgesehen sein oder es können passive Festlegemittel vorgesehen sein, wie etwa wenigstens eine überwindbare Verrastung.

Zur Vermeidung von Schäden durch Kollision der Scheibenanordnung mit weiteren Bauteilen der Bodenbearbeitungsmaschine kann die Bodenbearbeitungsmaschine eine Sensoranordnung mit wenigstens einem Sensor, etwa einem Näherungssensor oder/und einem Tastsensor, aufweisen. Die Sensoranordnung erfasst, ob sich die Scheibenanordnung in einem vorbestimmten Zulässigkeits-Stellungsbereich befindet, von welchem ausgehend für eine Bewegung der Scheibenanordnung relativ zum Fahrstandboden keine Kollision zu befürchten ist. Eine Bewegungssteuerung des Schutzdachs kann dann derart ausgebildet sein, dass eine Verlagerung von der Betriebsstellung in die Transportstellung nur dann zugelassen wird, wenn ein von der Sensoranordnung an eine die Schutzdachbewegung steuernde Steuereinrichtung übertragenes Erfassungssignal anzeigt, dass sich die Scheibenanordnung im vorbestimmten Zulässigkeits-Stellungsbereich befindet.

Für einen möglichst guten Schutz der Scheibenanordnung vor einem Zugriff von außen dann, wenn sich das Schutzdach in der abgesenkten Transportstellung befindet, kann die Bodenbearbeitungsmaschine eine verbindungsbasisfeste Abschirmung aufweisen, welche einen Aufnahmeraum, in dem sich die Scheibenanordnung bei in die Transportstellung abgesenktem Schutzdach befindet, wenigstens zum Fahrstand hin begrenzt. In entgegengesetzter Richtung, also vom Fahrstand weg, befindet sich entweder der Maschinenkörper als Zugangshindernis oder eine Seitenwandung des Fahrstands. Gelingt dem Vandalen jedoch der Zugang in den Fahrstand, ist die Abschirmung des Aufnahmeraums zum Fahrstand hin besonders hilfreich.

Die Abschirmung kann durch wenigstens eine ohnehin im Fahrstand vorhandene Baugruppe gebildet sein, wie etwa durch einen Geräteschrank oder ein Bedienpult. Diese Baugruppen können robust ausgeführt sein und einem Vandalismusangriff lange widerstehen. Als Abschirmung kann jedoch eine gesonderte Abschirmplatte vorgesehen sein, etwa aus Metall oder/und, bevorzugt gefülltem, Kunststoff.

Da die Scheibenanordnung in der Regel eine flächige, insbesondere ebene, Scheibenanordnung ist, welche sich in lokal zwei sowohl zueinander als auch zur Dickenrichtung der Scheibenanordnung orthogonalen Raumrichtungen erstreckt, begrenzt die Abschirmung den Aufnahmeraum bevorzugt wenigstens der Haupterstreckungsfläche der Scheibenanordnung gegenüberliegend. Die Abschirmung überdeckt dabei bevorzugt die gesamte Scheibenfläche und reicht besonders bevorzugt zu allen Seiten der Haupterstreckungsfläche der Scheibenanordnung über die Scheibe, insbesondere über die gesamte Scheibenanordnung hinaus.

Die Abschirmung kann den Aufnahmeraum auch sowohl zum Fahrstand hin als auch vom Fahrstand weg abschirmen, sodass die Scheibenanordnung in der abgesenkten Stellung auch vom Maschinenkörper her geschützt sein kann, etwa gegen sich im Maschinenkörper bewegende Teile oder sich niederschlagende Dämpfe und dergleichen.

Die Abschirmung kann für einen möglichst umfassenden Schutz der Scheibenanordnung in der abgesenkten Stellung um die Bewegungsbahn geschlossen umlaufend ausgebildet ist.

Die Scheibenanordnung ist bevorzugt eine Front- oder Windschutzscheibenanordnung, welche sich an dem in Vorwärtsfahrtrichtung der Bodenbearbeitungsmaschine vorauseilenden Endbereich des Fahrstands befindet. Dies muss jedoch nicht so sein. Die Scheibenanordnung kann auch eine Rückwand sein mit einer, bevorzugt transparenten, Heckscheibe. Weniger bevorzugt kann die Scheibenanordnung auch eine Seitenwand sein, wiederum bevorzugt, aber nicht zwingend, mit einer transparenten Scheibe.

Die Scheibenanordnung erstreckt sich bevorzugt in Maschinenquerrichtung, also parallel zur Nickachse. Wenngleich die oben genannte Scheibenanordnung die einzige Scheibenanordnung des Fahrstands sein kann, kann zusätzlich zu der Scheibenanordnung mit Abstand von dieser eine weitere ähnliche oder gleichartige Anordnung an der Bodenbearbeitungsmaschine vorgesehen sein. Diese weitere Anordnung ist nachfolgend lediglich zur besseren Unterscheidung von der oben genannten Scheibenanordnung als "Wandungsanordnung" bezeichnet. Dementsprechend kann die Bodenbearbeitungsmaschine gemäß einer bevorzugten Weiterbildung der vorliegenden Erfindung mit Abstand von der Scheibenanordnung eine Wandungsanordnung mit einer flächigen Wandung aufweisen. Die Wandungsanordnung kann einen dem Schutzdach näher gelegenen oberen Rand, einen mit Abstand vom oberen Rand dem Schutzdach ferner gelegenen unteren Rand und kann zwei den Abstand zwischen dem oberen und dem unteren Rand überbrückende Seitenränder aufweisen. Die Wandungsanordnung kann in einem ihrem oberen Rand näher als ihrem unteren Rand gelegenen oberen Verbindungsbereich mit dem Schutzdach und in einem ihrem unteren Rand näher als ihrem oberen Rand gelegenen unteren Verbindungsbereich mit dem Maschinenrahmen oder/und mit dem Fahrstandboden als einer Verbindungsbasis verbunden sein. Die Wandungsanordnung ist gemeinsam mit dem Schutzdach heb- und senkbar und ist hierzu mit ihrem unteren Rand an den Fahrstandboden annäherbar und von diesem entfernbar an der Bodenbearbeitungsmaschine aufgenommen.

Die Wandungsanordnung kann eine transparente Wandung oder eine blickdichte Wandung aufweisen. Sie ist bevorzugt eine Heckwandung bzw. bei transparenter Heckwandung eine Heckscheibe, welche sich an dem in Vorwärtsfahrtrichtung nachlaufenden Endbereich des Fahrstands befindet. Sie erstreckt sich bevorzugt wie die Scheibenanordnung längs der Nickachse der Bodenbearbeitungsmaschine. Die Scheibenanordnung und die Wandungsanordnung können in ihrer angehobenen Stellung, wenn sich das Schutzdach in der Betriebsstellung befindet, parallel zueinander verlaufen, können jedoch auch einen Winkel um eine zur Nickachse parallele Achse einschließen. Wenigstens der obere Rand der Scheibenanordnung und der obere Rand der Wandungsanordnung verlaufen jedoch bevorzugt parallel zueinander und zwar besonders bevorzugt parallel zur Nickachse, also in Maschinenquerrichtung. Bevorzugt sind sowohl Scheibenanordnung als auch Wandungsanordnung in ihrer angehobenen Stellung parallel zur Bewegungsbahn des Schutzdaches zwischen der Betriebsstellung und der Transportstellung angeordnet, sodass die Anordnungen mit geringstmöglichen Bewegungsraumbedarf abgesenkt werden können. Weiter bevorzugt sind die Scheibenanordnung und die Wandungsanordnung auch in ihrer abgesenkten Stellung zueinander parallel, also dann, wenn sich das Schutzdach in seiner Transportstellung befindet. Sofern keine Parallelität von Scheiben- und Wandungsanordnung erforderlich oder gewünscht ist, kann durch die oben beschriebene Konfiguration erreicht werden, dass Scheiben- und Wandungsanordnung in ihrer angehobenen und in ihrer abgesenkten Stellung jeweils die gleiche Relativanordnung zueinander aufweisen, etwa im gleichen Winkel zueinander geneigt sind.

Das oben zur Scheibenanordnung sowie zur Scheibe Gesagte gilt mutatis mutandis in gleicher Weise für die Wandungsanordnung bzw. deren Wandung, wobei die Scheibe der Scheibenanordnung durch die Wandung der Wandungsanordnung zu ersetzen ist. Sofern sowohl die Scheibenanordnung wie auch die Wandungsanordnung um oder/und längs von Seiten- bzw. Lateral-Bewegungsachsen beweglich mit dem Schutzdach und mit einem Führungsteil einer Linearführung verbunden sind, sind die Seiten-Bewegungsachsen und die Lateral-Bewegungsachsen der Scheiben- und der Wandungsanordnung zueinander bevorzugt parallel.

Das Schutzdach kann einen Schalenträger aufweisen, welcher mit einem Hubführungsteil zur gemeinsamen Hub- und Senkbewegung verbunden ist. Das Hubführungsteil wirkt mit einem verbindungsbasisfesten Hubgegenführungsteil zur Führung der Hub- und Senkbewegung des Schutzdaches zusammen. Die beiden Teile: Hubführungsteil und Hubgegenführungsteil bilden gemeinsam eine Bewegungsführung des Schutzdaches zur Hub- und Senkbewegung. Bevorzugt bilden Hubführungsteil und Hubgegenführungsteil eine raumsparende Teleskop-Bewegungsführung. Ein Teil aus Hubführungsteil und Hubgegenführungsteil, vorzugsweise das Hubführungsteil, ist dann in das jeweils andere Teil, vorzugsweise das Hubgegenführungsteil, einfahrbar und aus diesem ausfahrbar.

Mit dieser Bewegungsführung kann die oben als bevorzugt genannte geradlinige Bewegungsbahn des Schutzdaches bei seiner Verstellung zwischen der Betriebsstellung und der Transportstellung bei geringem Bauraumbedarf realisiert werden.

Grundsätzlich kann daran gedacht sein, den Schalenträger relativ zum Hubführungsteil beweglich an diesem anzuordnen, etwa in einer zur Hub- und Senkbewegungsbahn orthogonalen Richtung. Dadurch kann das Schutzdach als Ganzes parallel zum Fahrstandboden verlagert werden. Aus Gründen einer möglichst hohen Stabilität der Schutzdachkonstruktion ist jedoch der Schalenträger bevorzugt starr mit dem Hubführungsteil verbunden.

Zur Veränderung, insbesondere zur Vergrößerung der mit dem Schutzdach abdeckbaren Fläche des Fahrstandbodens kann an dem Schalenträger wenigstens eine Dachschale relativ zum Schalenträger beweglich aufgenommen sein. Die wenigstens eine Dachschale ist relativ zum Schalenträger translatorisch längs einer Auszugsbahn beweglich, welche mit der Bewegungsbahn der Hub- und Senkbewegung des Schutzdaches einen Winkel einschließt. Dieser Winkel ist bevorzugt ein rechter Winkel oder ein Winkel in einem Bereich von 80° bis 100°, so dass bereits mit einem geringen Verlagerungsweg der wenigstens einen Dachschale eine erhebliche Veränderung der vom Schutzdach überdeckten Fahrstandbodenfläche erzielbar ist. Bevorzugt verläuft die Auszugsbahn wenigstens in der Betriebsstellung des Schutzdachs parallel zur Fahrstandbodenfläche.

Mit "Transportstellung" ist in der vorliegenden Anmeldung grundsätzlich nur eine Stellung des Schutzdaches bezeichnet, welche hinsichtlich ihres verringerten Höhenabstands vom Fahrstandboden eine Einhaltung von vorgegebenen Transportmaßen gestattet. Die Verwendung des Begriffs "Transportstellung" sagt jedoch zunächst nichts darüber aus, in welcher Relativstellung sich das Schutzdach oder Teile davon längs der Nickachse oder längs der Rollachse bezüglich des Maschinenrahmens verlagert befindet. Das Schutzdach befindet sich daher unabhängig von der Relativstellung der wenigstens einen Dachschale relativ zum Schalenträger in der Transportstellung, wenn es entsprechend zum Fahrstandboden hin abgesenkt ist.

Der Fahrstand ist bevorzugt längs der Nickachse von Seitenwandungen begrenzt. Längs der Rollachse grenzt der Fahrstand üblicherweise beiderseits an den Maschinenrahmen an. Zur Erschwerung der Zugänglichkeit des Fahrstands bei in die Transportstellung verstellten Schutzdach kann das Schutzdach in der Transportstellung bevorzugt eine Schutzposition einnehmen, in welcher es mit seinen Seitenrandbereichen auf Randbereichen der Seitenwandungen aufliegt oder/und diese auf ihrer vom Fahrstand wegweisenden Seite hintergreift. Ebenso kann das Schutzdach in der Schutzposition mit seinen vorderen und hinteren Randbereichen an Randbereichen des Maschinenrahmens, welche den Fahrstand längs der Rollachse begrenzen, aufliegen oder/und diese auf ihrer vom Fahrstand wegweisenden Seite hintergreifen. So ist eine nahezu hermetische Abriegelung des durch die Transportstellung des Schutzdaches verkleinerten Fahrstandvolumens möglich.

Gerade für den Transport der Maschine und die damit verbundene Einhaltung vorgegebener maximaler Transportmaße kann es vorteilhaft sein, wenn zwar das Schutzdach in die Transportstellung verbracht ist, dennoch der Fahrstand wenigstens bereichsweise zugänglich und nutzbar ist, um die nahezu verstaubereite Bodenbearbeitungsmaschine vom Fahrstand aus auf ein Transportfahrzeug zu verfahren. Um dies zu ermöglichen, kann vorgesehen sein, dass in der Transportstellung, bei Betrachtung jeweils einer Projektion von Schalenträger und Fahrstandboden längs der Gierachse der Bodenbearbeitungsmaschine auf eine zur Gierachse orthogonale Projektionsebene, in der Projektionsebene die vom projizierten Schalenträger eingenommene Fläche kleiner ist als die vom Fahrstandboden eingenommene Fläche. Dadurch kann der Schalenträger nicht die gesamte Fläche des Fahrstandbodens abdecken. Weiter ist bevorzugt vorgesehen, dass die wenigstens eine Dachschale relativ zum Schalenträger eine Manövrierstellung einnehmen kann, in welcher ein Manövrierbereich des Fahrstandbodens vom Schutzdach unbedeckt ist. Somit kann dann wenn die Dachschale in die Manövrierstellung bewegt ist, der Manövrierbereich des Fahrstands trotz des in die Transportstellung abgesenkten Schutzdaches vom Schutzdach unbedeckt sein, sodass in diesem Bereich ein Maschinenführer wenigstens den Bewegungsantrieb der Maschine bedienen und die Umgebung der Maschine beobachten kann. Bevorzugt ist daher vorgesehen, dass sich in dem in der Manövrierstellung nicht abgedeckten Manövrierbereich des Fahrstands die Bedieneinrichtung oder ein Teil der Bedieneinrichtung befindet, welcher eine Steuerung wenigstens eines Fahrbetriebs der Maschine ermöglicht. Es kann auch daran gedacht sein, die Bedieneinrichtung oder Teile davon im Fahrstand beweglich anzuordnen, sodass die Bedieneinrichtung oder ein Teil derselben erforderlichenfalls in den oben genannten nicht abgedeckten Manövrierbereich verbracht werden kann.

Erkenntnisse aus dem bisherigen Maschinenbetrieb haben gezeigt, dass zum Manövrieren der Maschine bei in die Transportstellung abgesenktem Schutzdach und mit der wenigstens einen Dachschale in der Manövrierstellung ein Querendbereich des Fahrstands, also ein längs der Nickachse ganz außen liegender Bereich, als Manövrierbereich von Vorteil ist. Um zu ermöglichen, dass ein Querendbereich des Fahrstands von dem in die Transportstellung abgesenkten Schutzdach unbedeckt verbleiben kann, kann die vom Fahrstandboden eingenommene Fläche längs der Nickachse der Bodenbearbeitungsmaschine in wenigstens einer Richtung über die vom projizierten Schalenträger eingenommene Fläche hinausreichen. Vorzugsweise weist dann die Auszugsbahn, bei Betrachtung in dem kartesischen Koordinatensystem aus Rollachse, Gierachse und Nickachse, längs der Nickachse eine größte Bahnkomponente auf, sodass sie längs der Nickachse sicher ausreichend verlagerbar ist, um einen nicht abgedeckten Manövrierbereich an einem Querende des Fahrstands bilden zu können oder/und um einen im Betrieb zur Verbesserung des Sichtfelds des Maschinenführers vergrößerten, insbesondere verbreiterten Fahrstand mit dem Schutzdach überdecken zu können.

Bevorzugt befindet sich der Schalenträger längs der Nickachse in der Maschinenquermitte, wobei sich besonders bevorzugt die längs der Nickachse zu messende Quermitte des Schalenträgers in der in gleicher Richtung zu messender Maschinenquermitte befindet. Häufig ist vor einer Verladung der Maschine auf ein Transportfahrzeug nicht vorherzusehen, wo aufgrund der jeweils am Verladeort herrschenden Platzverhältnisse ein Manövrierbereich vorteilhafterweise gebildet werden soll. Ein Manövrierbereich kann dann an jedem von beiden Querenden des Fahrstands gebildet werden, wenn die vom Fahrstand eingenommene Fläche längs der Nickachse beiderseits über die vom projizierten Schalenträger eingenommene Fläche hinausreicht, wobei die Auszugsbahn, bei Betrachtung in dem kartesischen Koordinatensystem aus Rollachse, Gierachse und Nickachse, eine größte Bahnkomponente längs der Nickachse aufweist.

Eine möglichst große Veränderung der durch das Schutzdach abdeckbaren Fläche, gewünschtenfalls über den Fahrstandboden hinaus, und eine auf den jeweiligen Betriebsfall möglichst gute Anpassbarkeit der Lage und Größe des Schutzdaches kann dadurch erzielt werden, dass an dem Schalenträger wenigstens zwei Dachschalen unabhängig voneinander oder/und gemeinsam miteinander relativ zum Schalenträger bewegbar vorgesehen sind. Da im Betrieb der Bodenbearbeitungsmaschine das Schutzdach hinsichtlich Größe und Lage in der Regel am häufigsten längs der Nickachse verändert werden muss, um abhängig von Sonneneinstrahlung und Witterungseinflüssen den Maschinenführer am Fahrstand optimal zu schützen und um im Vorschubweg der Bearbeitungsmaschine liegenden Hindernissen, wie beispielsweise Ampeln, Verkehrsschildern Bäumen usw., ausweichen zu können, ohne die Maschine von ihrem vorgesehenen Vorschubweg abbringen zu müssen, sind die wenigstens zwei Dachschalen jeweils bevorzugt längs der Nickachse relativ zum Schalenträger bewegbar. Bevorzugt verläuft deren jeweilige Auszugsbahn parallel zur Nickachse, wie oben bereits ausgesagt ist.

Dann, wenn die jeweiligen Auszugsbahnen der wenigstens zwei Dachschalen nicht parallel oder koaxial zu einander sind, gilt das in der vorliegenden Anmeldung in Bezug auf eine vorteilhafte Ausbildung des Schutzdaches über eine Auszugsbahn Gesagte für die Auszugsbahn wenigstens einer Dachschale.

Das Schutzdach kann nicht nur zur Abdeckung des Fahrstands im Betrieb und während Phasen des Nicht-Gebrauchs dienen, sondern kann außerdem wiederum Funktionsbauteile der Bodenbearbeitungsmaschine tragen. Hierzu kann in konkreterer Ausgestaltung vorgesehen sein, dass an dem Schalenträger oder an dem Hubführungsteil als einem Lagerungsbauteil ein Funktionsbauteilträger zwischen einer betriebsbereiten Funktionsstellung und einer transportbereiten Verstauungsstellung relativ zum Lagerungsbauteil bewegbar angeordnet ist. Ein solcher Funktionsbauteilträger kann wenigstens ein Funktionsbauteil tragen, welches beispielsweise zur Bestimmung der Position der Maschine bzw. der Arbeitsvorrichtung oder/und zur Bestimmung einer Relativanordnung der Maschine bzw. der Arbeitsvorrichtung, insbesondere einer Fräswalze, relativ zum zu bearbeitenden Boden ausgebildet ist. Beispielsweise kann der Funktionsbauteilträger Lasersensoren zur Nivellierung oder/und Empfänger für ein Globales Navigationssatellitensystem (GNSS), wie z. B. GPS, GLONASS oder Galileo tragen.

Durch die Verlagerbarkeit des Funktionsbauteilträgers zwischen der Funktionsstellung und der Verstauungsstellung kann ein vom Funktionsbauteilträger getragenes Funktionsbauteil in der Funktionsstellung prominent vom Schutzdach und damit vom höchsten Punkt der Maschine vorstehen, was gerade im bevorzugten Fall der oben genannten Lasersensoren von Vorteil ist, damit diese von einer außerhalb der Maschine stationierten Laserquelle, oder allgemein: Signalquelle, leicht erreichbar sind. Trotzdem kann das Funktionsbauteil in der Verstauungsstellung wenigstens in Maschinenhöhenrichtung nicht über die Silhouette des Maschinenkörpers hinausragen.

Bevorzugt ist der Funktionsbauteilträger zwischen der Funktionsstellung und der Verstauungsstellung verschwenkbar, da eine Schwenkbewegung einfach zu führen ist und mit geringem Raumbedarf ausgeführt werden kann. Da die Maschine parallel zur Rollachse in der Regel eine wesentlich größere Abmessung aufweist als parallel zur Nickachse, verläuft die Schwenkachse vorzugsweise parallel zur Nickachse. Dann erfolgt beim Schwenken des Funktionsbauteilträgers eine Verlagerung desselben längs der Rollachse und es kann sichergestellt werden, dass der Funktionsbauteilträger in seiner Verstauungsstellung nicht über den übrigen Maschinenköpers vorsteht und unerwünschterweise abmessungsbestimmend wird.

Der Funktionsbauteilträger ist bevorzugt in der Verstauungsstellung durch das Schutzdach gegen eine unerwünschte Verlagerung in die Funktionsstellung geschützt. Weiter bevorzugt ist der Funktionsbauteilträger auch in der Funktionsstellung gegen eine unerwünschte Verlagerung in die Verstauungsstellung durch das Schutzdach geschützt. Dies kann dadurch erreicht werden, dass der Funktionsbauteilträger nur dann von wenigstens einer seiner Stellungen in die jeweils andere Stellung verlagert werden kann, wenn sich die wenigstens eine Dachschale, vorzugsweise wenn sich zwei Dachschalen in einer vorbestimmten, längs ihrer jeweiligen Auszugsbahn ausgezogenen Stellung befinden. Im bevorzugten Fall eines zwischen seinen Stellungen verschwenkbaren Funktionsbauteilträgers ist dieser daher bevorzugt um eine, vorzugsweise zur Nickachse parallele, Schwenkachse zwischen der Funktionsstellung und der Verstauungsstellung verschwenkbar, parallel zu welcher eine größte von drei zueinander paarweise orthogonalen Verlaufskomponenten der Auszugsbahn verläuft. Wiederum ist dabei die Auszugsbahn in einem kartesischen Koordinatensystem aus Nickachse, Gierachse und Rollachse zu betrachten. Bevorzugt verläuft die Auszugsbahn parallel zur Nickachse.

Die wenigstens eine Dachschale weist daher zur Realisierung der obigen Schutzfunktion des Funktionsbauteilträgers gegen eine unerwünschte Verlagerung von der Funktionsstellung in die Verstauungsstellung eine Ausnehmung auf, welche der Funktionsbauteilträger in der Funktionsstellung durchsetzt, in der Verstauungsstellung dagegen nicht. Ist mehr als eine Dachschale vorhanden ist die Ausnehmung vorzugsweise durch wenigstens zwei Dachschalen, besonders bevorzugt durch genau zwei Dachschalen gebildet, wenn diese sich in einer vorbestimmten, einander angenäherten Stellung befinden.

Der Fahrstand kann gemäß einer vorteilhaften Weiterbildung der vorliegenden Erfindung seitlich vergrößert werden, sodass sich auch mehrere Personen dort bequem aufhalten können oder/und sodass sich der Maschinenführer längs der Nickachse über einen weiteren Bereich hinweg bewegen kann und dadurch ein vergrößertes Sichtfeld hat. Hierzu ist konstruktiv bevorzugt vorgesehen, dass wenigstens eine den Fahrstand längs der Nickachse der Bodenbearbeitungsmaschine begrenzende Seitenwandung relativ zum Fahrstandboden wenigstens, bevorzugt nur längs der Nickachse translatorisch verlagerbar ist.

Damit der vergrößerte Fahrstand im vergrößerten Bereich auch begehbar ist, kann am Fahrstandboden wenigstens ein Zusatzbodenbauteil angeordnet sein, welches zur Vergrößerung der Fahrstandbodenfläche relativ zu einem Haupt-Fahrstandbodenabschnitt beweglich ist. So kann die Breite der Maschine dann, wenn eine Vergrößerung des Fahrstands nicht erforderlich ist, gering gehalten werden. Bevorzugt wird das wenigstens eine Zusatzbodenbauteil um eine Schwenkachse verschwenkt. Da die Vergrößerung des Fahrstands längs der Nickachse erfolgen soll, verläuft die Schwenkachse des Zusatzbodenbauteils bevorzugt parallel zur Rollachse. Zur erleichterten Bedienung ist die Bewegung des Zusatzbodenbauteils mit der Bewegung der ihm nächstgelegenen Seitenwandung gekoppelt, sodass gleichzeitig mit der Verlagerung der Seitenwandung zur Vergrößerung des Fahrstands das der Seitenwandung zugeordnete Zusatzbodenbauteil ebenfalls derart verlagert wird, dass es in dem vergrößerten Abschnitt des Fahrstands einen begehbaren Bodenabschnitt bildet. Im Falle einer Verkleinerung des Fahrstands durch Verlagerung der Seitenwandung in entgegengesetzter Richtung wird das Zusatzbodenbauteil durch die bevorzugte Bewegungskopplung mit der Seitenwandung zurück in eine Nichtgebrauchsstellung bewegt.

Die eingangs genannte Funktionseinrichtung, welche durch die Bedieneinrichtung auf dem Fahrstand steuerbar ist, kann ein Bewegungsantrieb oder/und eine Lenkungsvorrichtung der Maschine sein oder/und kann die bodenbearbeitende Arbeitsvorrichtung sein, etwa eine Fräswalze.

Die vorliegende Anmeldung betrifft außerdem ein Verfahren zur Veränderung der Höhenabmessung einer Bodenbearbeitungsmaschine, insbesondere einer Bodenbearbeitungsmaschine, wie sie oben beschrieben ist mit allen Merkmalen des Anspruchs 14.

Die vorliegende Erfindung wird nachfolgend anhand der beiliegenden Zeichnungen näher erläutert. Es stellt dar:
- Figur 1: eine grobschematische Seitenansicht einer Bodenbearbeitungsmaschine gemäß einer Ausnutzung der vorliegenden Erfindung,
- Figur 2: eine grobschematische Vorderansicht des Schutzdachaufbaus der Bodenbearbeitungsmaschine von Figur 1,
- Figur 3: eine grobschematische Schnittansicht des Schutzdachaufbaus von Figur 2 von der Seite, bei Betrachtung der Schnittebene III-III von Figur 2,
- Figur 4: eine grobschematische Seitenansicht des Schutzdachaufbaus der Figuren 2 und 3 mit dem Schutzdach in der Betriebsstellung,
- Figur 5: eine grobschematische Seitenansicht des Schutzdachaufbaus von Figur 4 mit dem Schutzdach in der Transportstellung,
- Figur 6: eine grobschematische Draufsicht auf das Schutzdach des Schutzdachaufbaus der Figuren 2 bis 5 mit zwei einander maximal angenäherten Dachschalen und
- Figur 7: eine grobschematische Draufsicht auf das Schutzdach von Figur 6 mit zwei voneinander entfernten Dachschalen und einem zwischen diesen erkennbaren Schalenträger.

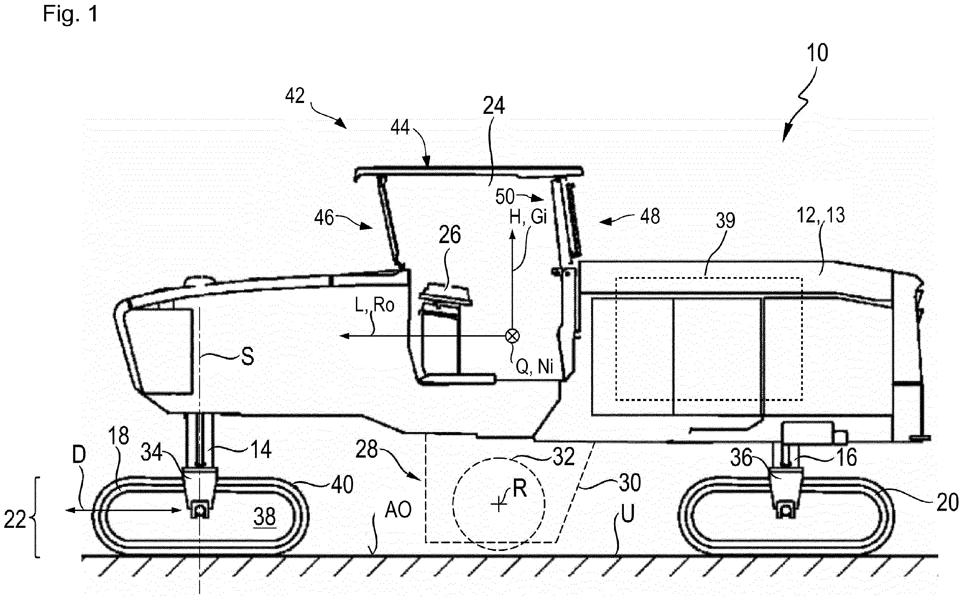

In Figur 1 ist eine erfindungsgemäße Ausführungsform einer Bodenbearbeitungsmaschine in Gestalt einer Boden- oder Straßen-Großfräse allgemein mit 10 bezeichnet. Sie umfasst einen Maschinenrahmen 12, welcher das Grundgerüst für einen Maschinenkörper 13 bildet. Der Maschinenkörper 13 umfasst den Maschinenrahmen 12 und mit dem Maschinenrahmen 12 verbundene, gegebenenfalls relativ zu diesem bewegliche Bauteile der Maschine 10.

Der Maschinenkörper 13 umfasst vordere Hubsäulen 14 und hintere Hubsäulen 16, welche einenends mit dem Maschinenrahmen 12 und anderenends mit vorderen Laufwerken 18 bzw. mit hinteren Laufwerken 20 verbunden sind. Der Abstand des Maschinenrahmens 12 von den Laufwerken 18 und 20 ist durch die Hubsäulen 14 und 16 veränderbar.

Die Laufwerke 18 und 20 sind beispielhaft als Kettenlaufwerke dargestellt. Einzelne oder alle Laufwerke 18 oder/und 20 können abweichend hiervon auch Radlaufwerke sein.

Der Betrachter von Figur 1 blickt auf die Bodenbearbeitungsmaschine oder kurz "Maschine" 10 in Richtung der zur Zeichenebene von Figur 1 orthogonalen Maschinenquerrichtung Q. Eine zur Maschinenquerrichtung Q orthogonale Maschinenlängsrichtung ist mit L bezeichnet und verläuft parallel zur Zeichenebene von Figur 1. Eine Maschinenhöhenrichtung H verläuft ebenfalls parallel zur Zeichenebene von Figur 1 und orthogonal zur Maschinenlängs- und zur Maschinenquerrichtung L bzw. Q. Die Pfeilspitze der Maschinenlängsrichtung L in Figur 1 weist in Vorwärtsrichtung. Die Maschinenhöhenrichtung H verläuft parallel zur Gierachse Gi der Maschine 10, die Maschinenlängsrichtung L verläuft parallel zur Rollachse Ro und die Maschinenquerrichtung Q verläuft parallel zur Nickachse Ni.

Die Bodenbearbeitungsmaschine 10 weist einen Fahrstand 24 auf, von dem aus ein Maschinenführer über ein Schaltpult 26 die Maschine 10 steuern kann.

Unter dem Maschinenrahmen 12 ist eine Arbeitsbaugruppe 28 angeordnet, hier beispielhaft als Fräsbaugruppe 28 mit einer in einem Fräswalzenkasten 30 aufgenommenen Fräswalze 32, die um eine in Maschinenquerrichtung Q verlaufende Fräsachse R rotierbar ist, um damit während einer Bodenbearbeitung Untergrundmaterial ausgehend von der Aufstandsoberfläche AO des Untergrunds U mit einer durch die relative Höhenlage des Maschinenrahmens 12 bestimmten Frästiefe abtragen zu können. Die Fräswalze 32 ist daher eine Arbeitsvorrichtung im Sinne der vorliegenden Anmeldung. Alternativ oder zusätzlich kann die Fräswalze 32 relativ zum Maschinenrahmen 12 höhenverstellbar an diesem aufgenommen sein.

Die Höhenverstellbarkeit des Maschinenrahmens 12 durch die Hubsäulen 14 und 16 dient auch der Einstellung der Fräs- oder allgemein Arbeitstiefe der Maschine 10 bei der Bodenbearbeitung. Es handelt sich bei der beispielhaft dargestellten Bodenbearbeitungsmaschine 10 um eine Großfräse, für die die Anordnung der Fräsbaugruppe 28 in Maschinenlängsrichtung L zwischen den vorderen und den hinteren Laufwerken 18 bzw. 20 typisch ist. Derartige Großfräsen oder auch bodenabtragende Maschinen im Allgemeinen können ein Transportband aufweisen, um abgetragenes Bodenmaterial von der Maschine 10 weg zu transportieren. Ein auch bei der Maschine 10 grundsätzlich vorhandenes Transportband ist aus Gründen besserer Übersichtlichkeit in Figur 1 nicht dargestellt.

In der Seitenansicht von Figur 1 nicht zu erkennen ist, dass die Maschine 10 sowohl in ihrem vorderen Endbereich als auch in ihrem hinteren Endbereich jeweils zwei Hubsäulen 14 bzw. 16 mit jeweils einem damit verbundenen Laufwerk 18 bzw. 20 aufweist. Die vorderen Hubsäulen 14 sind in weiterhin an sich bekannter Weise jeweils mittels einer Laufwerk-Verbindungsstruktur 34, etwa einer das Laufwerk 18 in Maschinenquerrichtung Q übergreifenden Verbindungsgabel, mit den Laufwerken 18 gekoppelt. Die hinteren Hubsäulen 16 sind mit ihrem jeweiligen Laufwerk 20 über eine mit der Laufwerk-Verbindungsstruktur 34 identisch aufgebaute Laufwerk-Verbindungsstruktur 36 verbunden. Die Laufwerke 18 und 20 sind im Wesentlichen identisch aufgebaut und bilden das Fahrwerk 22 der Maschine. Die Laufwerke 18 und 20 sind motorisch angetrieben, in der Regel durch einen nicht dargestellten Hydromotor.

Die Antriebskraftquelle der Maschine 10 bildet eine am Maschinenrahmen 12 aufgenommene Brennkraftmaschine 39. Durch sie wird die Fräswalze 32 im dargestellten Ausführungsbeispiel zur Drehung angetrieben. Durch die Leistung der Brennkraftmaschine 39 wird außerdem an der Maschine 10 ein Hydraulikdruckreservoir bereitgestellt, durch welches Hydromotoren und hydraulische Aktuatoren an der Maschine betreibbar sind. Die Brennkraftmaschine 39 ist somit auch Quelle der Vortriebskraft der Maschine 10.

Das Laufwerk 18 mit einer durch den Doppelpfeil D angedeuteten Laufrichtung weist im dargestellten Beispiel eine radial innere Aufnahme-und Führungsstruktur 38 auf, an der eine umlaufbare Laufkette 40 angeordnet und zur Umlaufbewegung geführt ist.

Die Hubsäule 14 und mit ihr das Laufwerk 18 ist durch eine nicht näher dargestellte Lenkvorrichtung um eine Lenkachse S drehbar. Bevorzugt zusätzlich, aber auch alternativ kann die Hubsäule 16 und mit ihr das Laufwerk 20 durch eine Lenkvorrichtung um eine zur Lenkachse S parallele Lenkachse drehbar sein.

Der Fahrstand 24 ist von einem Schutzdachaufbau 42 bedeckt, welcher ein Schutzdach 44 umfasst, das über eine vordere Scheibenanordnung 46 und eine hintere Wandungsanordnung 48 mit dem Maschinenrahmen 12 bzw. Maschinenkörper 13 verbunden ist. Wie anhand der nachfolgenden Figuren detailliert erläutert werden wird, ist das Schutzdach 44 mittels einer Bewegungsführung 50 heb- und senkbar am Maschinenrahmen 12 angeordnet. In Figur 1 ist das Schutzdach 44 in seiner angehobenen Betriebsstellung gezeigt, in welcher die Maschine 10 für einen Bearbeitungsbetrieb bereit ist.

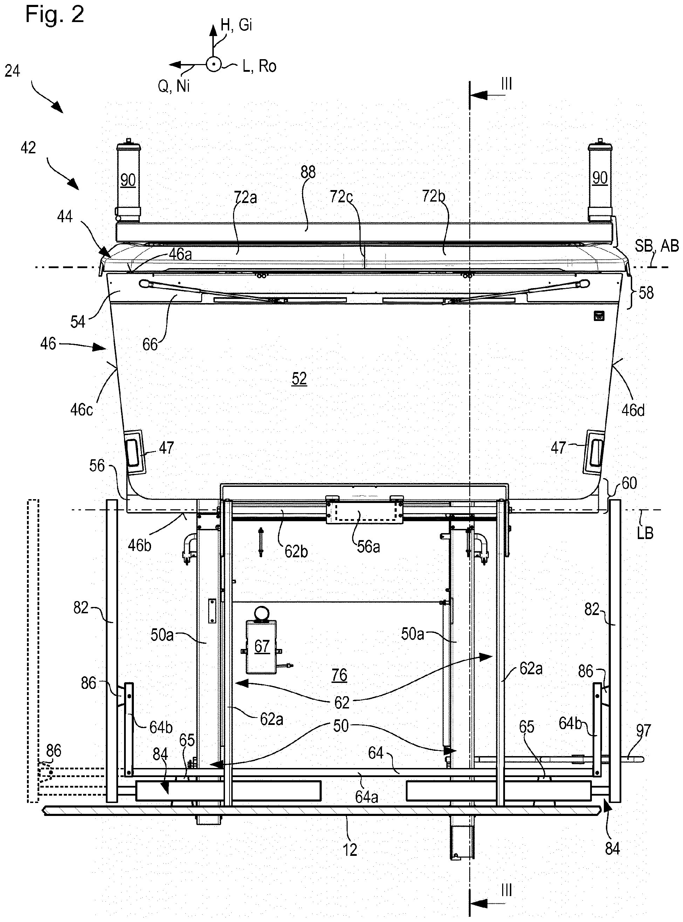

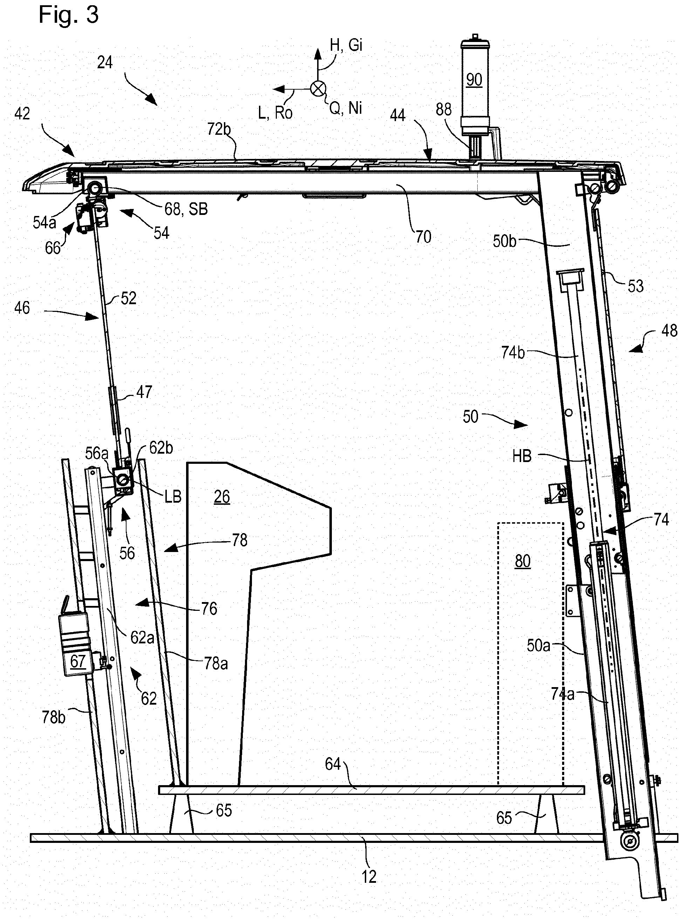

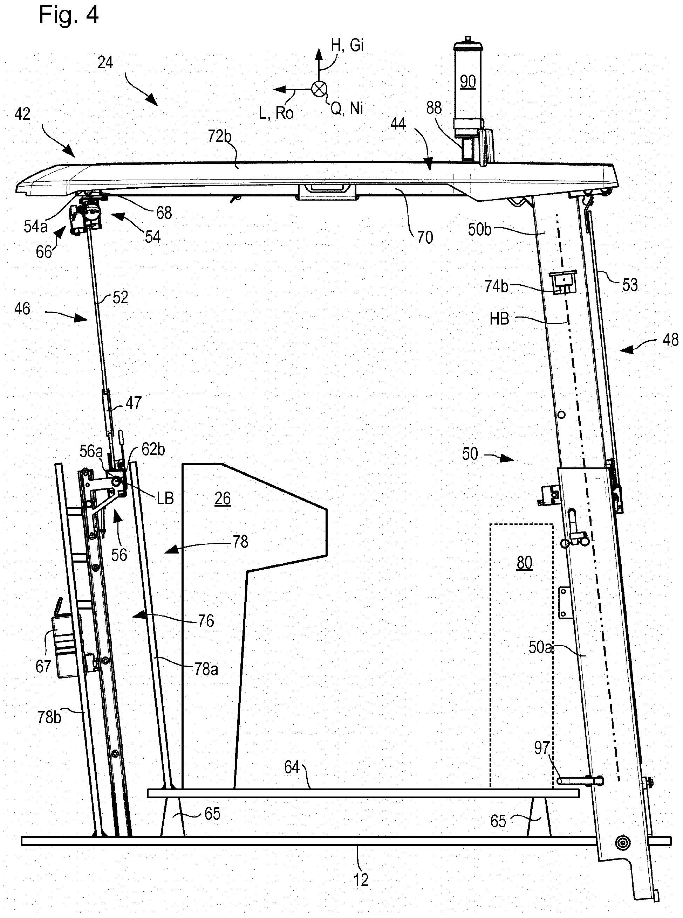

Figur 2 zeigt grobschematisch den Fahrstand 24 mit seinem Schutzdachaufbau 42 mit Blickrichtung längs der Rollachse Ro von der Maschinenvorderseite zum Maschinenheck hin. Figur 3 zeigt eine seitliche Schnittansicht des Fahrstands 24 mit Schutzdachaufbau 42 bei Betrachtung der Schnittebene III-III von Figur 2. Figur 4 zeigt eine grobschematische ungeschnittene Ansicht des Fahrstands 24 von Figur 3, längs der Nickachse Ni. Für die nachfolgende Beschreibung des Fahrstands 24 und damit insbesondere des Schutzdachaufbaus 42 sollen die Figuren 2, 3 und 4 gemeinsam betrachtet werden.

Die Scheibenanordnung 46 erstreckt sich in Höhenrichtung H, also parallel zur Gierachse Gi, zwischen einem oberen Rand 46a und einem unteren Rand 46b. Die beiden Ränder 46a und 46b sind durch Seitenränder 46c und 46d der Scheibenanordnung 46 zu einer flächigen, insbesondere ebenen Scheibenanordnung 46 verbunden. Die Seitenränder 46c und 46d sind dabei von einer transparenten Scheibe 52 gebildet, welche eine obere Verbindungsvorrichtung 54 und eine untere Verbindungsvorrichtung 56 trägt. Die Verbindungsvorrichtungen 54 und 56 sind starr mit der Scheibe 52 zur gemeinsamen Bewegung mit dieser verbunden und sind daher Teil der Scheibenanordnung 46.

Die Scheibenanordnung 46 ist mittels der oberen Verbindungsvorrichtung 54 in einem oberen Verbindungsbereich 58 mit dem Schutzdach 44 verbunden und ist mittels der unteren Verbindungsvorrichtung 56 in einem unteren Verbindungsbereich 60 über eine Linearführung 62 mit dem Maschinenrahmen 12 verbunden.

Die Linearführung 62 umfasst zwei längs der Nickachse Ni mit Abstand voneinander vorgesehene, parallele Führungsschienen 62a, in welchen die untere Verbindungsvorrichtung 56 und damit der untere Verbindungsbereich 60 der Scheibenanordnung 46 längs der Führungsschienen 62a beweglich geführt ist. Die Führungsschienen 62a sind im dargestellten Beispiel mit dem Maschinenrahmen 12 verbunden (siehe Figuren 3 bis 5)

Genauer ist im dargestellten Ausführungsbeispiel eine Führungsstange 62b an den parallelen Führungsschienen 62a verschieblich geführt. An der Führungsstange 62b ist eine in Figur 2 nur strichliniert dargestellte Wälzkörperbuchse 56a translatorisch längs einer durch die Längsachse der Führungsstange 62b definierte Lateral-Bewegungsachse LB und rotatorisch um diese Lateral-Bewegungsachse LB bewegbar geführt. Die Wälzkörperbuchse 56a ist starr mit der unteren Verbindungsvorrichtung 56 und damit mit der Scheibe 52 verbunden.

Die obere Verbindungsvorrichtung 54 kann weitere Funktionseinrichtungen tragen, wie beispielsweise Scheibenwischer 66. Ein Spritzwasserbehälter 67 für eine nicht näher dargestellte Reinigungsanlage der Scheibe 52 ist in Figur 2 ebenfalls dargestellt.

Wie am besten in der Schnittansicht von Figur 3 zu erkennen ist, ist die obere Verbindungsvorrichtung 54 in analoger Weise zur unteren Verbindungsvorrichtung 56 über eine zur Nickachse Ni parallele Führungsstange 68 und eine fest mit der oberen Verbindungsvorrichtung 54 verbundene Wälzkörperbuchse 54a mit einem Schalenträger 70 des Schutzdaches 44 verbunden. Die Führungsstange 68 ist dabei fest mit dem Schalenträger 70 verbunden. Die Scheibenanordnung 46 ist somit translatorisch längs einer durch die Längsachse der Führungsstange 68 definierte Seiten-Bewegungsachse SB und rotatorisch um die Seiten-Bewegungsachse SB beweglich. Somit können weder zwischen dem Schalenträger 70 und somit dem Schutzdach 44 und der Scheibenanordnung 46 noch zwischen der Linearführung 62 und somit einem maschinenrahmenfesten Fahrstandboden 64 und der Scheibenanordnung 46 ein Drehmoment um eine zu der Nickachse Ni parallelen Biegemomentenachse übertragen werden. Ebenso wenig können zwischen dem Schalenträger 70 und der Scheibenanordnung 46 sowie zwischen der Scheibenanordnung 46 und der Linearführung 62 parallel zur Nickachse Ni wirkende Querkräfte übertragen werden. Die Seiten-Bewegungsachse SB und die Lateral-Bewegungsachse LB sind zueinander und zur Nickachse Ni parallel.

Der Fahrstandboden 64 ist im dargestellten Ausführungsbeispiel durch Vibrationsdämpfer 65 mit dem Maschinenrahmen 12 verbunden, um den Maschinenführer auf dem Maschinenstand 24 von u. a. durch den Fräsbetrieb induzierten Schwingungen zu entlasten. Die durch die Schwingungsentkopplung zugelassene Mikro-Relativbewegung ist im Rahmen der vorliegenden Anmeldung vernachlässigbar. Der Fahrstandboden 64 ist maschinenrahmenfest.

Die Scheibenanordnung 46 ist durch die beschriebene Lagerung mittels Wälzkörperbuchsen 54a und 56a sowie zugeordneten Führungsstangen 62b und 68 sowohl relativ zum Schutzdach 44 als auch relativ zum Fahrstandboden 64 parallel zur Nickachse Ni verschiebbar. Zum Handangriff durch den Maschinenführer weist die Scheibenanordnung 46 an beiden Seitenrändern 46c und 46d jeweils eine Griffformation 47 auf, sodass der Maschinenführer die Scheibenanordnung 46 längs der Nickachse Ni im Rahmen ihres Bewegungsbereichs in eine ihm jeweils geeignet erscheinende Stellung verbringen kann. Somit kann die Scheibenanordnung 46 beispielsweise aus einem Kollisionsbereich bewegt werden, wenn bei fortgesetzter Vorwärtsfahrt der Maschine 10 während eines Bodenbearbeitungsbetriebs eine Kollision mit einem Objekt droht, etwa einer Ampel, Geäst und dergleichen.

Der Schalenträger 70 trägt zwei Dachschalen 72a und 72b. Die Dachschalen 72a und 72b sind individuell relativ zum Schalenträger 70 längs einer zur Nickachse Ni parallelen Auszugsbahn AB verlagerbar. Die Dachschalen 72a und 72b können auch gemeinsam relativ zum Schalenträger 70 längs der Auszugsbahn AB verlagert werden. Eine weitere Relativbeweglichkeit zwischen den Dachschalen 72a und 72b einerseits und dem Schalenträger 70 andererseits besteht nicht.

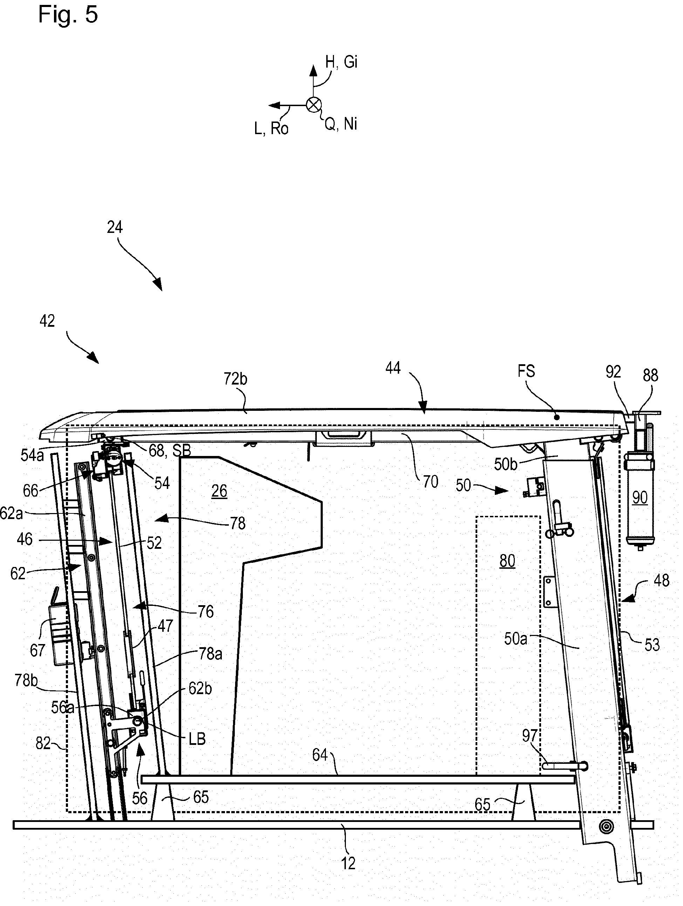

Der Schalenträger 70 ist durch die Bewegungsführung 50 längs der Bewegungsbahn HB (siehe Figur 3) zwischen der in den Figuren 1 bis 4 gezeigten angehobenen Betriebsstellung und der in Figur 5 gezeigten abgesenkten Transportstellung heb- und senkbar.

Die bevorzugt teleskopartig aufgebaute Bewegungsführung 50 wird anhand der Schnittzeichnung von Figur 3 näher erläutert: die Bewegungsführung 50 umfasst ein zur gemeinsamen Bewegung mit dem Maschinenrahmen 12 verbundenes und daher maschinenrahmenfestes Führungsrohr 50a und ein relativ zu diesem längs der mit der Rohrlängsachse des Führungsrohrs 50a zusammenfallenden Bewegungsbahn HB bewegliches Führungsrohr 50b. Zur stabileren Bewegung des Schutzdaches 44 sind die Führungsrohre 50a und 50b paarweise vorgesehen und zwar längs der Nickachse Ni zueinander versetzt. Beide Führungsrohrpaare 50a, 50b sind bevorzugt identisch aufgebaut. Das bewegliche Führungsrohr 50b bildet ein Hubführungsteil und das maschinenrahmenfeste Führungsrohr 50a bildet ein Hubgegenführungsteil im Sinne der obigen Beschreibungseinleitung.

Im maschinenrahmenfesten Führungsrohr 50a ist ein Bewegungsaktuator in Gestalt einer Kolben-Zylinder-Anordnung 74 aufgenommen, deren Zylinder 74a am maschinenrahmenfesten Führungsrohr 50a angelenkt ist. Die aus dem Zylinder 74a ausfahrbare und in diesen einfahrbare Kolbenstange 74b ist mit ihrem freien Längsende am beweglichen Führungsrohr 50b angelenkt. Durch Betätigung der Kolben-Zylinder-Anordnung 74 kann somit das Schutzdach 44 an den Fahrstandboden 64 angenähert und von diesem entfernt werden.

Durch die beschriebene Art der Verbindung der Scheibenanordnung 46 mit dem Schutzdach 44, insbesondere mit dem Schalenträger 70, wird die Scheibenanordnung 46 gemeinsam mit dem Schutzdach 44 längs der Bewegungsbahn HB verlagert, wenn das Schutzdach 44 zwischen seiner Betriebsstellung und seiner Transportstellung verlagert wird. Da die Scheibenanordnung 46 in ihrem unteren Verbindungsbereich 60 über die untere Verbindungsvorrichtung 56 und die Linearführung 62 in der beschriebenen Weise mit dem Fahrstandboden 64 verbunden ist, wird mit einer Verlagerung des Schutzdaches 44 zwischen seiner Betriebsstellung und seiner Transportstellung der untere Rand 46b der Scheibenanordnung 46 an den Fahrstandboden 64 angenähert oder von diesem entfernt, je nach Bewegungsrichtung des Schutzdaches 44.

Die Scheibenanordnung 46 kann so in einen Aufnahmeraum 76 abgesenkt werden, in welchem es gegen einen Vandalismusangriff von außen besser geschützt ist als dies im Stand der Technik der Fall war. Der Aufnahmeraum 76 ist in Richtung vom Fahrstand 24 weg durch den Maschinenkörper 13 abgedeckt, sodass die in den Aufnahmeraum 76 abgesenkte Scheibenanordnung 46 nur dann zugänglich wäre, wenn eine Person trotz des in die Transportstellung abgesenkten Schutzdaches 44 in den dann verkleinerten Fahrstand 24 gelangen würde.

Um selbst dann einen Angriff auf die Scheibenanordnung 46 verhindern zu können, kann eine Abschirmung 78 vorgesehen sein, welche eine Abschirmplatte 78a aufweist, die der Scheibenanordnung 46 in der Transportstellung des Schutzdaches zum Fahrstand 24 hin im Wesentlichen parallel gegenüberliegt und diese so vor einem Zugriff aus dem Fahrstand 24 schützt. Zusätzlich kann die Abschirmung 78 eine zur Abschirmplatte 78a im Wesentlichen parallele weitere Abschirmplatte 78b aufweisen, welche den Aufnahmeraum 76 in Richtung vom Fahrstand 24 weg, also zum vorderen Bereich des Maschinenkörpers 13 hin begrenzt. Die Abschirmplatte 78a überragt die Scheibenanordnung 46 in deren abgesenkter Stellung von Figur 5 längs der Nickachse Ni bevorzugt in beide Richtungen. Weiterhin überragt die Abschirmplatte 78a die Scheibenanordnung 46 in deren abgesenkter Stellung längs der Gierachse Gi wenigstens zum Schutzdach 44 hin, bevorzugt auch in die entgegengesetzte Richtung. Gleiches gilt vorzugsweise auch für die weitere Abschirmplatte 78b. Bevorzugt umgibt die Abschirmung 78 den Aufnahmeraum 76 um die Bewegungsbahn der Scheibenanordnung 46 umlaufend, um die in den Aufnahmeraum 76 abgesenkte Scheibenanordnung 46 möglichst vollumfänglich abzuschirmen. Die Abschirmplatte 78a kann unmittelbar mit dem Fahrstandboden 64 verbunden, insbesondere verschweißt sein. Die vom Fahrstand 24 weg abschirmende Abschirmplatte 78b kann unmittelbar mit dem Maschinenrahmen 12 verbunden, insbesondere verschweißt sein. Maschinenrahmenfest sind in diesem Fall beide Abschirmplatten 78a und 78b.

Für die Wandungsanordnung 48 gilt das oben zur Scheibenanordnung 46 Gesagte entsprechend, mit der Maßgabe, dass an Stelle der Scheibe 52 die Wandung 53 tritt. Auch die Wandungsanordnung 48 mit einer bevorzugt transparenten Wandung 53 ist parallel zur Nickachse Ni relativ zum Schutzdach 44 und ebenso relativ zum Fahrstandboden 64 über eine Linearführung verlagerbar am Schutzdachaufbau 42 bzw. am Maschinenrahmen 12 aufgenommen. Ebenso ist durch eine entsprechende drehbewegliche Verbindung der Wandungsanordnung 48 mit dem Schutzdach 44 und mit der in den Figuren nicht dargestellten Linearführung eine Übertragung von Biegemomenten um eine zur Nickachse Ni parallele Biegemomentenachse zwischen Schutzdach 44 und Wandungsanordnung 48 sowie zwischen Wandungsanordnung 48 und Fahrstandboden 64 verhindert.

Die Lateral-Bewegungsachse LB der Scheibenanordnung 46 und einer entsprechenden Lateral-Bewegungsachse am unteren Endbereich der Wandungsanordnung 48 verlaufen bevorzugt parallel. Dadurch können die Scheibe 52 und die Wandung 53 sowohl in ihrer angehobenen Stellung dann, wenn das Schutzdach 44 sich in seiner Betriebsstellung befindet, als auch in ihrer abgesenkten Stellung dann, wenn sich das Schutzdach 44 in seiner Transportstellung befindet, parallel zueinander ausgerichtet sein. Im dargestellten Ausführungsbeispiel ist die parallele Ausrichtung von Wandung 53 und Scheibe 52 nicht nur in ihren jeweiligen Endstellungen, sondern auch in jeder Zwischenstellung gegeben.

An dem dem Maschinenheck näher gelegenen hinteren Bereich des Fahrstands 24 kann ein Geräteschrank 80 vorgesehen sein, in welchem beispielsweise Werkzeug oder/und besondere Betriebskleidung oder/und Verpflegung für den Maschinenführer aufgenommen sein kann. Der Geräteschrank 80 kann robust ausgeführt sein und bei ausreichender Breite längs der Nickachse Ni als Abschirmung der abgesenkten Wandungsanordnung 48 zum Fahrstand 24 hin dienen. Der optional vorhandene Geräteschrank 80 ist in den Figuren 2 bis 5 lediglich strichliniert eingezeichnet.

In Figur 2 sind beiderseits des Fahrstandbodens 64 je eine den Fahrstand 24 längs der Nickachse Ni begrenzende Seitenwandung 82 grobschematisch dargestellt. Die Seitenwandungen 82 in Figur 2 verlaufen orthogonal zur Zeichenebene von Figur 2 und somit im Wesentlichen parallel zur Gierachse Gi und parallel zur Rollachse Ro.

Beide Seitenwandungen 82 sind parallel zur Nickachse Ni verlagerbar. Am Beispiel der in Figur 2 linken Seitenwandung 82 ist dies veranschaulicht durch die mit durchgezogener Linie gezeigte eingezogene Stellung und die mit Strichlinierung gezeigte ausgestellte Stellung. So kann der Fahrstand 24 erforderlichenfalls verbreitert werden, also längs der Nickachse Ni vergrößert werden. Zur Verstellung der Seitenwandungen sind unter dem Fahrstandboden 64 Verstellaktuatoren 84 vorgesehen, in bevorzugter Gestalt einer Kolben-Zylinder-Anordnung. Alternativ zu einer pneumatischen oder hydraulischen Kolben-Zylinder-Anordnung kann auch ein elektromechanischer Aktuator 84 vorgesehen sein. Bevorzugt sind die Aktuatoren 84 unabhängig voneinander verstellbar, sodass der Fahrstand 24 auch nur wahlweise zu einer Seite verbreitert werden kann.

Der Fahrstandboden 64 umfasst einen Haupt-Fahrstandbodenabschnitt 64a, welcher ortsfest mit dem Maschinenrahmen verbunden ist. Im Bereich der Seitenwandungen 82 weist der Fahrstandboden 64 Zusatzbodenbauteile 64b auf, an jedem Querendbereich eines, welche beweglich mit dem Haupt-Fahrstandbodenabschnitt 64a verbunden sind, im dargestellten Beispiel schwenkbeweglich verbunden sind. Die Schwenkachse, um welche die Zusatzbodenbauteile 64b mit dem Haupt-Fahrstandbodenabschnitt 64a verbunden sind, verläuft parallel zur Rollachse Ro. Dies ist jedoch nur eine grobschematische Darstellung. Die Kinematik der Zusatzbodenbauteile 64b kann auch abweichend sein, kann beispielsweise eine kombinierte Dreh- und Verschiebebewegung umfassen. Jedes Zusatzbodenbauteil 64b ist mit der ihm nächstgelegenen Seitenwandung 82 durch ein Koppelteil 86 zur gemeinsamen Bewegung, bevorzugt mechanisch, gekoppelt. Das Koppelteil 86 sorgt dafür, dass ein Zusatzbodenbauteil 64b mit der Verstellung seiner gekoppelten Seitenwandung 82 in die ausgestellte Stellung ausgeklappt wird, sodass es mit dem Haupt-Fahrstandbodenabschnitt 64a in einer gemeinsamen Erstreckungsebene liegt und somit einen Fahrstandboden 64 mit vergrößerter Fläche bildet. Bei der Rückverstellung der Seitenwandung 82 in die eingezogene Stellung sorgt das Koppelteil 86 dafür, dass die Fläche des Fahrstandbodens 64 durch Verlagerung des zugeordneten Zusatzbodenbauteils 64b in die in Figur 2 mit durchgezogener Linie gezeigte Stellung wieder verkleinert wird. Die Verstellaktuatoren 84 und die Zusatzbodenbauteile 64b sind aus Gründen der Übersichtlichkeit nur in Figur 2 dargestellt.

In Figur 5 ist die Seitenwandung 82 strichliniert im Umriss dargestellt. Figur 5 zeigt, dass dann, wenn das Schutzdach 44 in seine Transportstellung abgesenkt ist, das Schutzdach 44, insbesondere die Dachschalen 72a und 72b, einen oberen Rand der Seitenwandung 82 in Richtung vom Fahrstand 24 weg übergreifen. Die Seitenwandung 82 befindet sich dabei in ihrer eingezogenen Stellung. Auch in Figur 2 ist erkennbar, dass das Schutzdach 44 längs der Nickachse Ni die Seitenwandungen 82 in ihren eingezogenen Stellungen jeweils in Richtung vom Fahrstand 24 weg überragt. Durch den Hintergriff in der Transportstellung wird einem Vandalen ein Hebelangriff zur Lageveränderung des abgesenkten Schutzdachs 44 erschwert.

In den Figuren 2 bis 7 ist ein Funktionsbauteilträger 88 gezeigt, welcher sich in seiner Funktionsstellung, wie sie in den Figuren 2 bis 4, 6 und 7 dargestellt ist, über dem Schutzdach 44 befindet. An seinen beiden in Richtung längs der Nickachse Ni gelegenen Endbereichen trägt der Funktionsbauteilträger 88 jeweils ein Funktionsbauteil 90, im dargestellten Beispiel einen Lasersensor 90.

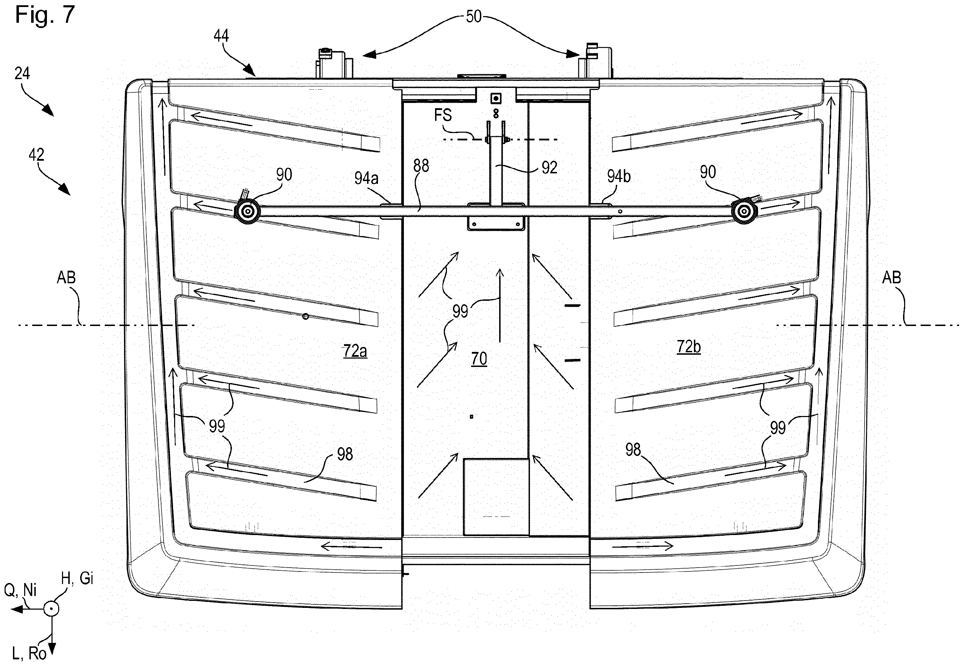

Wie am besten in Figur 7 zu erkennen ist, ist der Funktionsbauteilträger 88 über einen sich orthogonal zu ihm erstreckenden Ausleger 92 um eine Schwenkachse FS schwenkbar am Schalenträger 70 angelenkt. Der Funktionsbauteilträger 88 ist über den Ausleger 92 um die Schwenkachse FS um 180° zwischen seiner in den Figuren 2, 3, 4, 6 und 7 dargestellten Funktionsstellung und seiner in Figur 5 dargestellten Verstauungsstellung verstellbar. Die Verstellung kann von Hand erfolgen.

So kann ein Funktionsbauteil 90 vom Schutzdach 44 längs der Gierachse Gi in Richtung vom Fahrstand 24 weg aufragen, wenn das Funktionsbauteil 90 im Betrieb der Maschine 10 benötigt wird und kann unter die obere Begrenzungsfläche des Schutzdaches 44 verlagert sein, wenn es nicht benötigt wird oder wenn es stört, etwa beim Transport oder im Falle einer drohenden Kollision mit Objekten im Einsatzgebiet der Maschine 10.

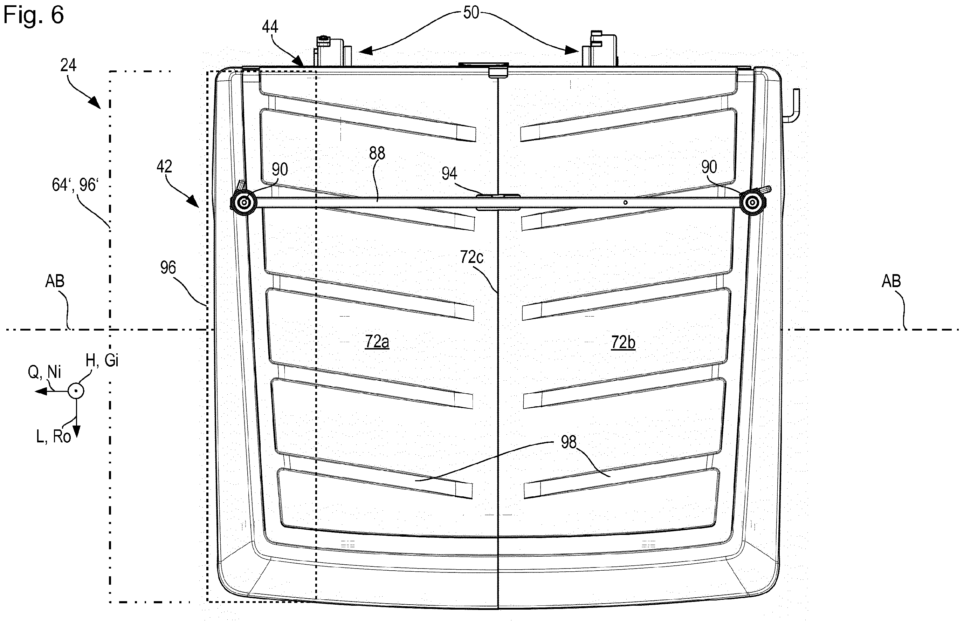

Der Funktionsbauteilträger 88 oder/und der Ausleger 92 durchsetzen in der Funktionsstellung des Funktionsbauteilträgers 88 eine Öffnung 94 im Schutzdach 44, welche zu im Wesentlichen gleichen Teilen in jeder der Dachschalen 72a und 72b ausgebildet ist. So kann dann, wenn die Dachschalen 72a und 72b, wie es in Figur 6 gezeigt ist, sich längs ihrer Trennfuge 72c berühren, der Funktionsbauteilträger 88 in einfacher Weise mechanisch durch die Dachschalen 72a und 72b gegen eine unerwünschte Verstellung von seiner Funktionsstellung in die Verstauungsstellung und umgekehrt blockiert sein. Die jeweiligen Öffnungshälften 94a und 94b sind in Figur 7 zu erkennen, in welchen die Dachschalen 72a und 72b voneinander weg längs der zur Nickachse Ni parallelen Auszugsbahn AB verlagert sind, um die vom Schutzdach 44 abgedeckte Fläche zu vergrößern.

In Figur 7 sind die Dachschalen 72a und 72b gegensinnig voneinander weg verlagert. Sie können jedoch auch gemeinsam gleichsinnig relativ zum Schalenträger 70 verlagert sein, um einen Manövrierbereich 96 (siehe Figur 6) bereitzustellen, in welchem der Fahrstandboden 64, insbesondere im Bereich des Haupt-Fahrstandbodenabschnitts 64a von dem Schutzdach 44 unbedeckt ist, sodass ein Maschinenführer im Manövrierbereich 96 sich selbst dann auf dem Fahrstand 24 befinden kann und die Maschine 10 manövrieren kann, wenn das Schutzdach 44 in seine Transportstellung abgesenkt ist. Wegen der in der Funktionsstellung vom Funktionsbauteilträger 88 durchsetzte Öffnung 94 ist die Bildung des Manövrierbereichs 96 im dargestellten Ausführungsbeispiel nur dann möglich, wenn der Funktionsbautei-lträger 88 zuvor in seiner Verstauungsstellung verbracht wurde. Der Funktionsbauteilträger 88 muss jedoch nicht vorhanden sein.

Wie in Figur 6 angedeutet ist, kann der Fahrstandboden, angedeutet als Fahrstandbodenvariante 64' abweichend von dem oben Gesagten auch längs der Nickachse Ni über das Schutzdach 44 in seiner in Figur 6 gezeigten Konfiguration mit kleiner Abdeckfläche hinausragen. Dann reicht bereits eine geringe Verlagerung der beiden Dachschalen 72a und 72b längs ihrer gemeinsamen Auszugsbahn AB aus, um einen ausreichenden Manövrierbereich 96' zu schaffen. Ragt der Fahrstandstandboden 64, wie oben beschrieben, längs der Nickachse Ni nicht über das Schutzdach in dessen Transportstellung hinaus, kann der Manövrierbereich 96 durch entsprechend vergrößerte Relativbeweglichkeit der Dachschale 72a oder/und 72b relativ zum Schalenträger 70 mit ausreichender Fläche bereitgestellt werden. Die Figur 6 gibt die wahren Größenverhältnisse nur qualitativ-schematisch wieder.

Nachzutragen ist, dass die Figuren 2, 4 und 5 einen Riegel 97 zeigen, welcher sich parallel zum Fahrstandboden 64 mit geringem Abstand zu diesem erstreckt. Durch Betätigung des Riegels 97 kann das Schutzdach 44 in seiner Transportstellung verriegelt und entriegelt werden. Der Maschinenführer kann den Riegel 97 auf der Aufstandsoberfläche AO stehend erreichen und muss zur Entriegelung des Schutzdaches 44, um dieses in die Betriebsstellung verbringen zu können, nicht auf den Fahrstand 24 klettern.

In den Dachschalen 72a, 72b ist jeweils eine vertiefte Rinnenformation 98 ausgeformt, welche der Ableitung von auftreffenden Niederschlägen dient. Die äußere Dachfläche einer Dachschale 72a und 72b ist zu ihrer jeweiligen Rinnenformation hin geneigt, so dass auf die Dachschalen 72a, 72b auftreffendes Regenwasser zu der Rinnenformation 98 hin strömt. In der Rinnenformation 98 strömt das Regenwasser aufgrund entsprechender Neigung des Rinnengrundes längs der Pfeile 99 in Figur 7. Der Übersichtlichkeit halber sind nicht alle Pfeile 99 mit Bezugszeichen versehen.

Ein bei auseinandergezogenen Dachschalen 72a, 72b nach oben freiliegender Abschnitt des Schalenträgers 70 ist - bei Betrachtung von oben - längs der Nickachse Ni konkav ausgebildet und längs der Rollachse Ro in wenigstens in seinem Quermittenbereich geneigt. Aufgrund der Konkavität strömt auf den Schalenträger 70 auftreffender Niederschlag zur Quermitte. Aufgrund der Neigung des Quermittenbereichs strömt der Niederschlag längs der Rollachse Ro vom Schalenträger 70 ab, bevorzugt zum hinteren Längsende der Maschine 10 hin. Auch am Schalenträger 70 zeigen Pfeile 99 grob die Strömungsrichtung auftreffenden Niederschlags an.

## Patentansprüche

1. Bodenbearbeitungsmaschine (10), wie etwa Straßenfräse (10), Recycler, Stabilisierer oder Surface-Miner, mit einem Fahrwerk (22) und einem vom Fahrwerk (22) getragenen Maschinenrahmen (12), wobei die Bodenbearbeitungsmaschine (10) eine Arbeitsvorrichtung (32) zur Bodenbearbeitung aufweist und wobei am Maschinenrahmen (12) ein Fahrstand (24) mit einem Fahrstandboden (64) und mit wenigstens einer Bedieneinrichtung (26) zur Steuerung wenigstens einer Funktionseinrichtung (32) der Bodenbearbeitungsmaschine (10) vorgesehen ist, wobei die Bodenbearbeitungsmaschine (10) ein zwischen einer angehobenen Betriebsstellung und einer abgesenkten Transportstellung relativ zum Fahrstandboden (64) heb- und senkbares Schutzdach (44) aufweist, wobei die Bodenbearbeitungsmaschine (10) eine Scheibe (52) umfassende Scheibenanordnung (46) mit einem dem Schutzdach (44) näher gelegenen oberen Rand (46a), mit einem mit Abstand vom oberen Rand (46a) dem Schutzdach (44) ferner gelegenen unteren Rand (46b) und mit zwei den Abstand zwischen dem oberen und dem unteren Rand (46a, 46b) überbrückenden Seitenrändern (46c, 46d) aufweist, wobei die Scheibenanordnung (46) in einem ihrem oberen Rand (46a) näher als ihrem unteren Rand (46b) gelegenen oberen Verbindungsbereich (58) mit dem Schutzdach (44) und in einem ihrem unteren Rand (46b) näher als ihrem oberen Rand (46a) gelegenen unteren Verbindungsbereich (60) mit einer maschinenrahmenfesten oder/und mit einer fahrstandbodenfesten Verbindungsbasis verbunden ist, wobei die Scheibenanordnung (46) gemeinsam mit dem Schutzdach (44) heb- und senkbar ist, wobei die Scheibenanordnung (46) mit ihrem unteren Rand (46b) an den Fahrstandboden (64) annäherbar und von diesem entfernbar an der Bodenbearbeitungsmaschine (10) aufgenommen ist,
**dadurch gekennzeichnet, dass** die Scheibenanordnung (46) in ihrem unteren Verbindungsbereich (60) mit der Verbindungsbasis über eine die Entfernungs- und die Annäherungsbewegung des unteren Verbindungsbereichs (60) relativ zur Verbindungsbasis beim Heben bzw. Senken des Schutzdaches führende Linearführung (62) derart verbunden ist, dass sich jeder Punkt der Scheibenanordnung (46) dann, wenn sich das Schutzdach (44) in der Transportstellung befindet, näher am Fahrstandboden (64) befindet, als dann, wenn sich das Schutzdach (44) in der Betriebsstellung befindet.

2. Bodenbearbeitungsmaschine (10) nach Anspruch 1,
**dadurch gekennzeichnet, dass** der obere Verbindungsbereich (58) der Scheibenanordnung (46) mit dem Schutzdach (44) um eine zur Bewegungsbahn (HB) der Hub- und Senkbewegung des Schutzdaches (44) orthogonale Seiten-Bewegungsachse (SB) relativ zum Schutzdach (44) drehbar verbunden ist oder/und dass der untere Verbindungsbereich (60) der Scheibenanordnung (46) mit der Verbindungsbasis um eine zur Seiten-Bewegungsachse (SB) parallele Lateral-Bewegungsachse (LB) relativ zur Verbindungsbasis drehbar verbunden ist,
oder/und
dass der obere Verbindungsbereich (58) mit dem Schutzdach (44) längs der Seiten-Bewegungsachse (SB) relativ zum Schutzdach (44) translatorisch verschiebbar verbunden ist und dass der untere Verbindungsbereich (60) mit der Verbindungsbasis längs der Lateral-Bewegungsachse (LB) relativ zur Verbindungsbasis translatorisch verschiebbar verbunden ist.

3. Bodenbearbeitungsmaschine (10) nach einem der vorhergehenden Ansprüche,
**dadurch gekennzeichnet, dass** die Bodenbearbeitungsmaschine (10) eine verbindungsbasisfeste Abschirmung (78) aufweist, welche einen Aufnahmeraum (76), in dem sich die Scheibenanordnung (46) in der abgesenkten Stellung befindet, wenigstens zum Fahrstand (24) hin abschirmt.

4. Bodenbearbeitungsmaschine (10) nach einem der vorhergehenden Ansprüche,
**dadurch gekennzeichnet, dass** die Bodenbearbeitungsmaschine (10) mit Abstand von der Scheibenanordnung (46) eine eine flächige Wandung (53) aufweisende Wandungsanordnung (48) aufweist mit einem dem Schutzdach (44) näher gelegenen oberen Rand, mit einem mit Abstand vom oberen Rand dem Schutzdach (44) ferner gelegenen unteren Rand und mit zwei den Abstand zwischen dem oberen und dem unteren Rand überbrückenden Seitenrändern, wobei die Wandungsanordnung (48) in einem ihrem oberen Rand näher als ihrem unteren Rand gelegenen oberen Verbindungsbereich mit dem Schutzdach (44) und in einem ihrem unteren Rand näher als ihrem oberen Rand gelegenen unteren Verbindungsbereich mit dem Maschinenrahmen (12) oder/und mit dem Fahrstandboden (64) als einer Verbindungsbasis verbunden ist, wobei die Wandungsanordnung (48) gemeinsam mit dem Schutzdach (44) heb- und senkbar ist und hierzu mit ihrem unteren Rand an den Fahrstandboden (64) annäherbar und von diesem entfernbar an der Bodenbearbeitungsmaschine (10) aufgenommen ist.

5. Bodenbearbeitungsmaschine (10) nach Anspruch 4,
**dadurch gekennzeichnet, dass** der obere Rand (46a) der Scheibenanordnung (46) und der obere Rand der Wandungsanordnung (48) parallel zueinander verlaufen, vorzugsweise in Maschinenquerrichtung (Q).

6. Bodenbearbeitungsmaschine (10) nach einem der vorhergehenden Ansprüche,
**dadurch gekennzeichnet, dass** das Schutzdach (44) einen Schalenträger (70) aufweist, welcher mit einem Hubführungsteil (50b) zur gemeinsamen Hub- und Senkbewegung verbunden ist, das mit einem verbindungsbasisfesten Hubgegenführungsteil (50a) zur Führung der Hub- und Senkbewegung des Schutzdaches (44) zusammenwirkt, wobei an dem Schalenträger (70) wenigstens eine Dachschale (72a, 72b) relativ zum Schalenträger (70) beweglich aufgenommen ist.

7. Bodenbearbeitungsmaschine (10) nach Anspruch 6,
**dadurch gekennzeichnet, dass** die wenigstens eine Dachschale (72a, 72b) relativ zum Schalenträger (70) translatorisch längs einer Auszugsbahn (AB) beweglich ist, welche mit der Bewegungsbahn (HB) der Hub- und Senkbewegung einen, vorzugsweise rechten, Winkel einschließt.

8. Bodenbearbeitungsmaschine (10) nach Anspruch 7,
**dadurch gekennzeichnet, dass** die vom Fahrstandboden (64) eingenommene Fläche längs der Nickachse (Ni) der Bodenbearbeitungsmaschine (10) in wenigstens einer Richtung, vorzugsweise in zwei entgegengesetzte Richtungen über die vom projizierten Schalenträger (70) eingenommene Fläche hinausreicht, wobei die Auszugsbahn (AB) eine längs der Nickachse (Ni) verlaufende größte Bahnkomponente aufweist, vorzugsweise längs der Nickachse (Ni) verläuft.

9. Bodenbearbeitungsmaschine (10) nach einem der Ansprüche 6 bis 8,
**dadurch gekennzeichnet, dass** an dem Schalenträger wenigstens zwei Dachschalen (72a, 72b) unabhängig voneinander oder/und gemeinsam relativ zum Schalenträger (70) bewegbar vorgesehen sind.

10. Bodenbearbeitungsmaschine (10) nach einem der Ansprüche 6 bis 9,
**dadurch gekennzeichnet, dass** an dem Schalenträger (70) oder an dem Hubführungsteil (50b) als einem Lagerungsbauteil ein Funktionsbauteilträger (88) zwischen einer betriebsbereiten Funktionsstellung und einer transportbereiten Verstauungsstellung relativ zum Lagerungsbauteil bewegbar, insbesondere verschwenkbar angeordnet ist.

11. Bodenbearbeitungsmaschine (10) nach Anspruch 10, unter Einbeziehung des Anspruchs 7,
**dadurch gekennzeichnet, dass** der Funktionsbauteilträger (88) um eine Schwenkachse (FS) zwischen der Funktionsstellung und der Verstauungsstellung verschwenkbar ist, parallel zu welcher eine größte von drei zueinander paarweise orthogonalen Verlaufskomponenten der Auszugsbahn (AB) verläuft, vorzugsweise zu welcher die Auszugsbahn (AB) parallel ist.

12. Bodenbearbeitungsmaschine (10) nach einem der vorhergehenden Ansprüche,
**dadurch gekennzeichnet, dass** wenigstens eine den Fahrstand (24) längs der Nickachse (Ni) der Bodenbearbeitungsmaschine (10) begrenzende Seitenwandung (82) relativ zum Fahrstandboden (64) längs der Nickachse (Ni) translatorisch verlagerbar ist, sodass der Fahrstand (24) längs der Nickachse (Ni) vergrößerbar ist.

13. Bodenbearbeitungsmaschine (10) nach Anspruch 12,
**dadurch gekennzeichnet, dass** am Fahrstandboden (64) wenigstens ein Zusatzbodenbauteil (64b) angeordnet ist, welches zur Vergrößerung der Fahrstandbodenfläche relativ zum Fahrstandboden (64) beweglich ist.

14. Verfahren zur Veränderung der Höhenabmessung einer Bodenbearbeitungsmaschine (10), wie etwa Straßenfräse (10), Recycler, Stabilisierer oder Surface-Miner, nach einem der vorhergehenden Ansprüche, wobei die Bodenbearbeitungsmaschine (10) einen Maschinenrahmen (12) und eine Arbeitsvorrichtung (32) zur Bodenbearbeitung aufweist und wobei am Maschinenrahmen (12) ein Fahrstand (24) mit einem Fahrstandboden (64) vorgesehen ist, wobei die Bodenbearbeitungsmaschine (10) ein zwischen einer angehobenen Betriebsstellung und einer abgesenkten Transportstellung relativ zum Fahrstandboden (64) heb- und senkbares Schutzdach (44) mit einer sowohl mit dem Schutzdach als auch mit einer maschinenrahmenfesten oder/und fahrstandbodenfesten Verbindungsbasis verbundenen Scheibenanordnung (46) aufweist, wobei das Verfahren den Schritt umfasst, das Schutzdach (44) relativ zum Fahrstandboden (64) zu heben oder zu senken, wobei der Schritt des Hebens des Schutzdaches (44) ein Heben eines mit der Verbindungsbasis verbundenen unteren Verbindungsbereichs (60) der Scheibenanordnung (46) relativ zum Fahrstandboden (64) umfasst und wobei der Schritt des Senkens des Schutzdaches (44) ein Senken des mit der Verbindungsbasis verbundenen unteren Verbindungsbereichs (60) der Scheibenanordnung (46) relativ zum Fahrstandboden (64) umfasst,
**dadurch gekennzeichnet, dass** der untere Verbindungsbereich (60) während des Hebens und des Senkens wenigstens auch translatorisch bewegt und dabei durch eine Linearführung (62) derart geführt wird, dass sich jeder Punkt der Scheibenanordnung (46) dann, wenn sich das Schutzdach (44) in der Transportstellung befindet, näher am Fahrstandboden (64) befindet, als dann, wenn sich das Schutzdach (44) in der Betriebsstellung befindet.

## Claims

1. An earth working machine (10), for example a road milling machine (10), recycler, stabilizer, or surface miner, having a propelling unit (22) and a machine frame (12) carried by the propelling unit (22); the earth working machine (10) comprising a working apparatus (32) for earth working; and an operator's platform (24), having an operator's platform floor (64) and having at least one operating device (26) for controlling at least one functional device (32) of the earth working machine (10), being provided on the machine frame (12); the earth working machine (10) comprising a protective canopy (44) liftable and lowerable relative to the operator's platform floor (64) between a lifted operating position and a lowered transport position; the earth working machine (10) comprising a panel arrangement (46), encompassing a panel (52), having an upper edge (46a) located closer to the protective canopy (44), having a lower edge (46b) located farther from the protective canopy (44) at a distance from the upper edge (46a), and having two side edges (46c, 46d) spanning the distance between the upper and the lower edge (46a, 46b); the panel arrangement (46) being connected in an upper connecting region (58), located closer to its upper edge (46a) than to its lower edge (46b), to the protective canopy (44) and being connected in a lower connecting region (60), located closer to its lower edge (46b) than to its upper edge (46a), to a machine frame-mounted and/or operator's platform floor-mounted connecting base, wherein the panel arrangement (46) is liftable and lowerable together with the protective canopy (44), the panel arrangement (46) being received on the earth working machine (10) with its lower edge (46b) movably toward and away from the operator's platform floor (64)
**characterized in that** the panel arrangement (46) is connected in its lower connecting region (60) to the connecting base via a linear guidance system (62) that guides the relative motion of the lower connecting region (60) away from and toward the connecting base as the protective canopy is respectively lifted and lowered, wherein said connection is such that, when the protective canopy (44) is in the transport position, each point on the panel arrangement (46) is located closer to the operator's platform floor (64) than when the protective canopy (44) is in the operating position.

2. The earth working machine (10) according to Claim 1,
**characterized in that** the upper connecting region (58) of the panel arrangement (46) is connected to the protective canopy (44) rotatably relative to the protective canopy (44) around a side motion axis (SB) that is orthogonal to the motion path (HB) of the lifting and lowering motion of the protective canopy (44); and/or the lower connecting region (60) of the panel arrangement (46) is connected to the connecting base rotatably relative to the connecting base around a lateral motion axis (LB) parallel to the side motion axis (SB); and/or
the upper connecting region (58) is connected to the protective canopy (44) translationally shiftably along the side motion axis (SB) relative to the protective canopy (44); and the lower connecting region (60) is connected to the connecting base translationally shiftably along the lateral motion axis (LB) relative to the connecting base.

3. The earth working machine (10) according to one of the preceding claims, **characterized in that** the earth working machine (10) comprises a connecting base-mounted shield (78) that delimits, at least toward the operator's platform (24), a receiving space (76) in which the panel arrangement (46) is located in the lowered position.

4. The earth working machine (10) according to one of the preceding claims, **characterized in that** the earth working machine (10) comprises, at a distance from the panel arrangement (46), a partition arrangement (48), comprising a planar partition (53), having an upper edge located closer to the protective canopy (44), having a lower edge located farther from the protective canopy (44) at a distance from the upper edge, and having two side edges spanning the distance between the upper and the lower edge; the partition arrangement (48) being connected to the protective canopy (44) in an upper connecting region located closer to its upper edge than to its lower edge, and to the machine frame (12) and/or to the operator's platform floor (64), constituting a connecting base, in a lower connecting region located closer to its lower edge than to its upper edge; the partition arrangement (48) being liftable and lowerable together with the protective canopy (44), and being received for that purpose on the earth working machine (10) with its lower edge movably toward and away from the operator's platform floor (64).

5. The earth working machine (10) according to Claim 4,
**characterized in that** the upper edge (46a) of the panel arrangement (46) and the upper edge of the partition arrangement (48) extend parallel to one another, preferably in a transverse machine direction (Q).

6. The earth working machine (10) according to one of the preceding claims, **characterized in that** the protective canopy (44) comprises a shell carrier (70) that is connected to a lifting guidance part (50b) for lifting and lowering motion together; said part interacting with a connecting base-mounted counterpart lifting guidance part (50a) in order to guide the lifting and lowering motion of the protective canopy (44); at least one canopy shell (72a, 72b) being received on the shell carrier (70) movably relative to the shell carrier (70).

7. The earth working machine (10) according to Claim 6,
**characterized in that** the at least one canopy shell (72a, 72b) is movable relative to the shell carrier (70) translationally along a pull-out path (AB) that encloses an angle, preferably a right angle, with the motion path (HB) of the lifting and lowering motion.

8. The earth working machine (10) according to Claim 7,
**characterized in that** the area occupied by the operator's platform floor (64) extends along the pitch axis (Ni) of the earth working machine (10) in at least one direction, preferably in two opposite directions, beyond the area occupied by the projected shell carrier (70), the pull-out path (AB) having a largest path component that extends along the pitch axis (Ni), preferably extending along the pitch axis (Ni).

9. The earth working machine (10) according to one of Claims 6 to 8, **characterized in that** at least two canopy shells (72a, 72b) are provided on the shell carrier, movably relative to the shell carrier (70) independently of one another and/or together with one another.

10. The earth working machine (10) according to one of Claims 6 to 9, **characterized in that** a functional component carrier (88) is arranged, on the shell carrier (70) or on the lifting guidance part (50b) constituting a mounting component, movably, in particular pivotably, relative to the mounting component between an operationally ready functional position and a transport-ready stowage position.

11. The earth working machine (10) according to Claim 10, incorporating Claim 7, **characterized in that** the functional component carrier (88) is pivotable between the functional position and the stowage position around a pivot axis (FS) parallel to which a largest of three mutually pairwise orthogonal extent components of the pull-out path (AB) extends, preferably to which the pull-out path (AB) is parallel.

12. The earth working machine (10) according to one of the preceding claims, **characterized in that** at least one side partition (82) delimiting the operator's platform (24) along the pitch axis (Ni) of the earth working machine (10) is translationally displaceable relative to the operator's platform floor (64) along the pitch axis (Ni) so that the operator's platform (24) is enlargeable along the pitch axis (Ni).

13. The earth working machine (10) according to Claim 12,
**characterized in that** at least one additional floor component (64b), which is movable relative to the operator's platform floor (64) in order to enlarge the operator's platform floor area, is arranged on the operator's platform floor (64).

14. A method for modifying the vertical dimension of an earth working machine (10), for example a road milling machine (10), recycler, stabilizer, or surface miner, according to one of the preceding claims; the earth working machine (10) comprising a machine frame (12) and a working apparatus (32) for earth working; and an operator's platform (24), having an operator's platform floor (64), being provided on the machine frame (12); the earth working machine (10) comprising a protective canopy (44) liftable and lowerable relative to the operator's platform floor (64) between a lifted operating position and a lowered transport position, having a panel arrangement (46) connected both to the protective canopy and to a machine frame-mounted and/or operator's platform floor-mounted connecting base; the method encompassing the step of lifting or lowering the protective canopy (44) relative to the operator's platform floor (64),
wherein the step of lifting the protective canopy (44) encompasses a lifting of a lower connecting region (60), connected to the connecting base, of the panel arrangement (46) relative to the operator's platform floor (64); and the step of lowering the protective canopy (44) encompasses a lowering of the lower connecting region (60), connected to the connecting base, of the panel arrangement (46) relative to the operator's platform floor (64), **characterized in that** the lower connection region (60), during lifting and lowering, is moved at least also translationally, and is thereby guided by a linear guidance system (62) such that, when the protective canopy (44) is in the transport position, each point on the panel arrangement (46) is located closer to the operator's platform floor (64) than when the protective canopy (44) is in the operating position.

## Revendications

1. Machine de traitement du sol (10), telle qu'une fraiseuse routière (10), une recycleuse, un stabilisateur ou un mineur de surface, avec un châssis (22) et un cadre de machine (12) supporté par le châssis (22), dans laquelle la machine de traitement du sol (10) comprend un dispositif de travail (32) pour le traitement du sol et dans lequel un poste de conduite (24) avec un plancher de poste de conduite (64) et avec au moins un dispositif de commande (26) pour la commande d'au moins un dispositif fonctionnel (32) de la machine de traitement du sol (10) est prévu sur le cadre de machine (12), dans lequel la machine de traitement du sol (10) comprend un toit de protection (44) qui peut être levé et abaissé par rapport au plancher de poste de conduite (64) entre une position d'opération levée et une position de transport abaissée, la machine de traitement du sol (10) comprenant un arrangement de disques (46) comprenant un disque (52), avec un bord supérieur (46a) plus proche du toit de protection (44), un bord inférieur (46b) plus éloigné du toit de protection (44) à une distance du bord supérieur (46a), avec deux bords (46c, 46d) couvrant la distance entre les bords supérieur et inférieur (46a, 46b), l'arrangement de disques (46) étant relié au toit de protection (44) dans une zone de raccordement supérieure (58) située plus près de son bord supérieur (46a) que de son bord inférieur (46b) et à une base de raccordement fixée au cadre de la machine et/ou au plancher de poste de conduite dans une partie de raccordement inférieure (60) située plus près de son bord inférieur (46b) que de son bord supérieur (46a), dans lequel l'arrangement de disques (46) peut être levé et abaissé en même temps que le toit de protection (44), l'arrangement de disques (46) étant reçu sur la machine de traitement du sol (10) avec son bord inférieur (46b) pouvant être approché et retiré du plancher de poste de conduite (64),
**caractérisé en ce que** l'arrangement de disques (46) est relié dans sa partie de raccordement inférieure (60) à la base de raccordement par un guide linéaire (62) qui commande le mouvement de retrait et d'approche de la partie de raccordement inférieure (60) par rapport à la base de raccordement lors du levage ou de l'abaissement du toit de protection, de telle sorte que chaque point de l'arrangement de disques (46) soit plus proche du plancher du poste de conduite (64) lorsque le toit de protection (44) est en position de transport que lorsque le toit de protection (44) est en position d'opération.

2. Machine de traitement du sol (10) selon la revendication 1,
**caractérisé en ce que en ce que la** zone de raccordement supérieure (58) de l'arrangement de disques (46) est reliée de manière rotative au toit de protection (44) autour d'un axe de mouvement latéral (SB) orthogonal à la trajectoire de mouvement (HB) du mouvement de levage et d'abaissement du toit de protection (44) par rapport au toit de protection (44), et/ou **en ce que** la zone de raccordement inférieure (60) de l'arrangement de disques (46) est reliée de manière rotative à la base de raccordement autour d'un axe de mouvement latéral (LB) parallèle à l'axe de mouvement latéral (SB) par rapport à la base de raccordement,
ou/et
**en ce que** la zone de raccordement supérieure (58) est reliée au toit de protection (44) de manière à pouvoir être déplacée en translation par rapport au toit de protection (44) le long de l'axe de mouvement latéral (SB), et **en ce que** la zone de raccordement inférieure (60) est reliée à la base de raccordement de manière à pouvoir être déplacée en translation par rapport à la base de raccordement le long de l'axe de mouvement latéral (LB).

3. Machine de traitement du sol (10) selon l'une des revendications précédentes, **caractérisée en ce que** la machine de traitement du sol (10) comprend une protection (78) fixé à la base de raccordement qui protège un espace de réception (76) dans lequel l'arrangement de disques (46) est situé en position abaissée, au moins vers le poste de conduite (24).

4. Machine de traitement du sol (10) selon l'une des revendications précédentes, **caractérisée en ce que** la machine de traitement du sol (10) comprend, espacé de l'arrangement de disques (46), un arrangement de paroi (48) présentant une paroi plate (53) avec un bord supérieur plus proche du toit de protection (44), avec un bord inférieur plus éloigné du toit de protection (44) à une distance du bord supérieur, et avec deux bords latéraux couvrant la distance entre le bord supérieur et le bord inférieur, dans lequel l'arrangement de paroi (48) est relié au toit de protection (44) dans une partie de raccordement supérieure plus proche de son bord supérieur que de son bord inférieur et au cadre de machine (12) et/ou au plancher de poste de conduite (64) comme base de raccordement dans une partie de raccordement inférieure plus proche de son bord inférieur que de son bord supérieur, dans lequel le dispositif de paroi (48) peut être levé et abaissé en même temps que le toit de protection (44) et, à cet effet, est reçu sur la machine de traitement du sol (10) avec son bord inférieur pouvant être approché et retiré du plancher de poste de conduite (64).

5. Machine de traitement du sol (10) selon la revendication 4,
**caractérisée en ce que** le bord supérieur (46a) de l'arrangement de disques (46) et le bord supérieur de l'arrangement de paroi (48) s'étendent parallèlement l'un à l'autre, de préférence dans la direction transversale de la machine (Q).

6. Machine de travail du sol (10) selon l'une des revendications précédentes, **caractérisée en ce que** le toit de protection (44) comprend un support de coque (70) qui est relié à une pièce de guidage de levage (50b) pour le mouvement commun de levage et d'abaissement, qui coopère avec une pièce de contre-guidage de levage (50a) fixée à la base de raccordement pour guider le mouvement de levage et d'abaissement du toit de protection (44), dans lequel au moins une coque de toit (72a, 72b) est reçue sur le support de coque (70) de manière mobile par rapport au support de coque (70).

7. Machine de traitement du sol (10) selon la revendication 6, **caractérisée en ce que** ladite au moins une coque de toit (72a, 72b) est mobile en translation par rapport au porte-coques (70) le long d'une trajectoire d'extension (AB), qui forme un angle, de préférence un angle droit, avec la trajectoire de mouvement (HB) du mouvement de levage et d'abaissement.

8. Machine de traitement du sol (10) selon la revendication 7, **caractérisée en ce que** la surface occupée par le plancher de poste de conduite (64) s'étend le long de l'axe de tangage (Ni) de la machine de traitement du sol (10) dans au moins une direction, de préférence dans deux directions opposées, au-delà de la surface occupée par le porte-coque (70), dans lequel le trajectoire d'extension (AB) comprend une composante de trajectoire la plus grande qui s'étend le long de l'axe de tangage (Ni), et s'étend de préférence le long de l'axe de tangage (Ni).

9. Machine de traitement du sol (10) selon l'une des revendications 6 à 8, **caractérisée en ce qu'**au moins deux coques de toit (72a, 72b) sont prévues sur le porte-coque de manière à pouvoir être déplacées indépendamment l'une de l'autre et/ou ensemble par rapport au porte-coques (70).

10. Machine de traitement du sol (10) selon l'une des revendications 6 à 9, **caractérisée en ce qu'**un support de composants fonctionnels (88) est disposé sur le porte-coque (70) ou sur la partie de guidage de levage (50b) en tant que composant de montage de manière à pouvoir être déplacé, en particulier pivoté, par rapport au composant de montage entre une position fonctionnelle d'opération et une position de rangement transportable.

11. Machine de traitement du sol (10) selon la revendication 10, y compris la revendication 7,
**caractérisée en ce que** le support de composants fonctionnels (88) peut pivoter autour d'un axe de pivotement (FS) entre la position fonctionnelle et la position de rangement, axe auquel s'étend parallèlement une plus grande des trois composantes mutuellement orthogonales en paires du trajectoire d'extension (AB), de préférence auquel le trajectoire d'extension est parallèle.

12. Machine de traitement du sol (10) selon l'une des revendications précédentes, **caractérisée en ce qu'**au moins une paroi latérale (82) délimitant le poste de conduite (24) le long de l'axe de tangage (Ni) de la machine de traitement du sol (10) est déplaçable en translation par rapport au plancher de poste de conduite (64) le long de l'axe de tangage (Ni), de sorte que le poste de conduite (24) peut être agrandi le long de l'axe de tangage (Ni).

13. Machine de traitement du sol (10) selon la revendication 12,
**caractérisée en ce qu'**au moins un élément de plancher supplémentaire (64b) est disposé sur le plancher du poste de conduite (64), qui est mobile par rapport au plancher du poste de conduite (64) pour agrandir la surface du plancher de poste de conduite.

14. Procédé pour modifier la dimension en hauteur d'une machine de traitement du sol (10), telle qu'une fraiseuse routière (10), une recycleuse, un stabilisateur ou un mineur de surface, selon l'une des revendications précédentes, dans lequel la machine de travail du sol (10) comprend un cadre de machine (12) et un dispositif de travail (32) pour le traitement du sol, et dans lequel un poste de conduite (24) avec un plancher de poste de conduite (64) est prévu sur le cadre de machine (12), dans lequel la machine de traitement du sol (10) comprend un toit de protection (44) qui peut être levé et abaissé par rapport au plancher de poste de conduite (64) entre une position d'opération levée et une position de transport abaissée et qui comporte un arrangement de disques (46) relié à la fois au toit de protection et à une base de raccordement fixée au cadre de la machine et/ou au plancher de poste de conduite, le procédé comprenant l'étape consistant à lever ou à abaisser le toit de protection (44) par rapport au plancher de poste de conduite (64), dans lequel l'étape du levage du toit de protection (44) comprend le levage d'une zone de raccordement inférieure (60) de l'arrangement de disques (46) connecté à la base de raccordement par rapport au plancher de poste de conduite (64) et dans lequel l'étape consistant à abaisser le toit de protection (44) comprend l'abaissement de la zone de raccordement inférieure (60) de l'arrangement de disques (46) connecté à la base de raccordement par rapport au plancher de poste de conduite (64),
**caractérisé en ce que** la zone de raccordement inférieure (60) est également déplacée au moins en translation pendant le levage et l'abaissement et est guidée par un guide linéaire (62) de telle sorte que chaque point de l'arrangement de disques (46) se trouve plus près du plancher de poste de conduite (64) lorsque le toit de protection (44) est en position de transport que lorsque le toit de protection (44) est en position d'opération.
